# EUROPEAN PATENT SPECIFICATION

(11) **EP 2 654 992 B1**
(45) Date of publication and mention of the grant of the patent: **23.03.2016**
(21) Application number: 11808450.8
(22) Date of filing: 15.12.2011
(51) Int. Cl.: B32B 27/08, B32B 27/16, B32B 27/32, B32B 27/30, B29C 47/26, B29C 47/06

(54) **MULTI-SEGMENT, HEAT-SHRINKABLE BARRIER FILM COMPRISING A PLURALITY OF MICROLAYERS**
WÄRMESCHRUMPFBARER BARRIEREFILM MIT MEHREREN SEGMENTEN, ENTHALTEND EINE VIELZAHL VON MIKROLAGEN
FILM BARRIÈRE THERMORÉTRACTABLE À SEGMENTS MULTIPLES, COMPRENANT UNE PLURALITÉ DE MICROCOUCHES

(30) Priority: 22.12.2010 US 201061425813 P; 14.12.2011 US 201113325196
(43) Date of publication of application: 30.10.2013
(73) Proprietor: Cryovac, Inc., Duncan, South Carolina 29334 (US)
(72) Inventor: BREBION, Mini, A., Simpsonville SC 29681 (US)
(74) Representative: UEXKÜLL & STOLBERG
(86) International application number: PCT/US2011/065025
(87) International publication number: WO 2012/087722

(56) References cited:
- WO-A2-2009/095231
- US-A- 4 732 795
- US-A1- 2009 029 079
- US-A1- 2010 227 136
- US-B1- 6 221 410
- US-B1- 6 346 285

## Description

### Background of the Invention

The present invention relates generally to a multi-segment packaging film and, more specifically, to a multi-segment, heat-shrinkable film having a relatively low oxygen transmission rate for packaging fresh foods such as fresh red meat, fresh poultry, etc.

Thermoplastic, polymeric packaging films for fresh foods are well known in the art. A particularly challenging fresh food packaging application is the packaging of bone-in meat, e.g., a section of beef or poultry containing the bones from the animal from which the section was obtained. Such bones are often sharp and can puncture the film in which the beef or poultry section has been packaged.

One way to obtain a tougher, stronger film that can resist puncture is to expose the film to ionizing radiation in order to induce cross-linking in the polymers from which the film is made. However, certain oxygen-barrier materials, such as those based on polyvinylidene chloride polymers and copolymers, degrade upon exposure to ionizing radiation. For this reason, multi-segment films have been developed, in which one segment is cross-linked, then joined to a second segment containing an oxygen-barrier material.

A particular challenge with such films is to obtain a tight fit, i.e., a relatively high degree of compression, between the film and the packaged meat or poultry product, as this minimizes meat purge (accumulation of meat juice between the surface of the meat and the packaging film), and otherwise provides for a more aesthetically-pleasing package appearance. To achieve a high degree of compression, multi-segment packaging films are generally oriented to render them heat-shrinkable, i.e., such that they have the ability, upon exposure to a certain temperature, to shrink or, if restrained from shrinking, to generate shrink tension within the film, thereby forming a tightly conforming covering over the packaged food product.

The manufacture of heat-shrinkable films is well known in the art, and may be generally accomplished by extrusion (single layer films) or coextrusion (multi-layer films) of thermoplastic polymeric materials, which have been heated to their flow or melting point from an extrusion or coextrusion die, e.g., either in tubular or planer (sheet) form. After a post-extrusion quench to cool, e.g., by water immersion, the relatively thick "tape" extrudate is then reheated to a temperature within its orientation temperature range and stretched to orient or align the crystallites and/or molecules of the material. The orientation temperature range for a given material or materials will vary with the different resinous polymers and/or blends thereof which comprise the material.

An oriented (i.e., heat-shrinkable) material will tend to return to its original unstretched (unextended) dimensions when heated to an appropriate elevated temperature. The degree to which a film returns to its original dimensions is expressed quantitatively as "free shrink" per ASTM D-2732-08. In general, in multi-segment films for the packaging of fresh red meat and poultry, higher degrees of free shrink are preferred, as high degrees of free shrink tend to result in higher degrees of compression between the film and the packaged product.

Accordingly, a need exists in the art for improved multi-segment barrier films, which have higher degrees of free shrink than is exhibited in conventional films. For further background information, reference is made to U.S. Pat. Nos. 4,732,795, 6,221,410, and 6,346,285, to U.S. Pat. Appl. Nos. 2009/0029079 and 2010/0227136, and to International Pat. Appl. No. 2009/095231.

### Summary of the Invention

The foregoing need is met by the present invention, which provides a multi-segment, heat-shrinkable film, comprising:
a. a first segment, comprising
   1) a bulk layer, and
   2) a microlayer section comprising a plurality of microlayers, wherein each of the microlayers and the bulk layer have a thickness such that the ratio of the thickness of any of the microlayers to the thickness of the bulk layer is at least 1:2; and
   wherein said microlayer section comprises at least 10 microlayers; and
b. a second segment, joined to the first segment, the second segment having an oxygen transmission rate of no more than 100 cc/m²-atm.-24 hrs. at 23°C (73°F) and 0% relative humidity,
wherein, the multi-segment film has a total free shrink (ASTM D2732-08) of at least 30% at 85°C (185°F).

Another aspect of the invention is directed towards a method of making a multi-segment, heat-shrinkable film, comprising:
a. forming a first film segment, comprising
   1) a bulk layer, and
   2) a microlayer section comprising a plurality of microlayers, wherein said microlayer section comprises at least 10 microlayers, and wherein each of the microlayers and the bulk layer have a thickness such that the ratio of the thickness of any of the microlayers to the thickness of the bulk layer is at least 1:2;
b. forming a second film segment, the second segment having an oxygen transmission rate of no more than 100 cc/m²-atm.-24 hrs. at 23°C (73°F) and 0% relative humidity;
c. joining the first film segment to the second film segment to thereby produce a multi-segment film; and
d. stretch-orienting the multi-segment film under conditions that impart heat-shrinkability to the film;
wherein, the multi-segment film has a total free shrink (ASTM D2732-08) of at least 30% at 85°C (185°F).

These and other aspects and features of the invention may be better understood with reference to the following description and accompanying drawings.

### Brief Description of the Drawings

FIG. 1 is a schematic view of a system 10 in accordance with the present invention for coextruding a multilayer film;
FIG. 2 is a cross-sectional view of the die 12 shown in FIG. 1;
FIG. 3 is a plan view one of the microlayer plates 48 in die 12;
FIG. 4 is a cross-sectional view of the microlayer plate 48 shown in FIG. 3;
FIG. 5 is a magnified, cross-sectional view of die 12, showing the combined flows from the microlayer plates 48 and distribution plates 32;
FIG. 6 is a cross-sectional view of a multi-segment film in accordance with the present invention;
FIG. 7 is a schematic of a process for producing the multi-segment film shown in FIG. 6;
FIG. 8 is a cross-sectional view of an alternative multi-segment film in accordance with the present invention; and
FIG. 9 is similar to FIG. 5, and illustrates the flow of polymer through die 12 to result in segment 90 of film 88, as shown in Fig. 6.

### Detailed Description of the Invention

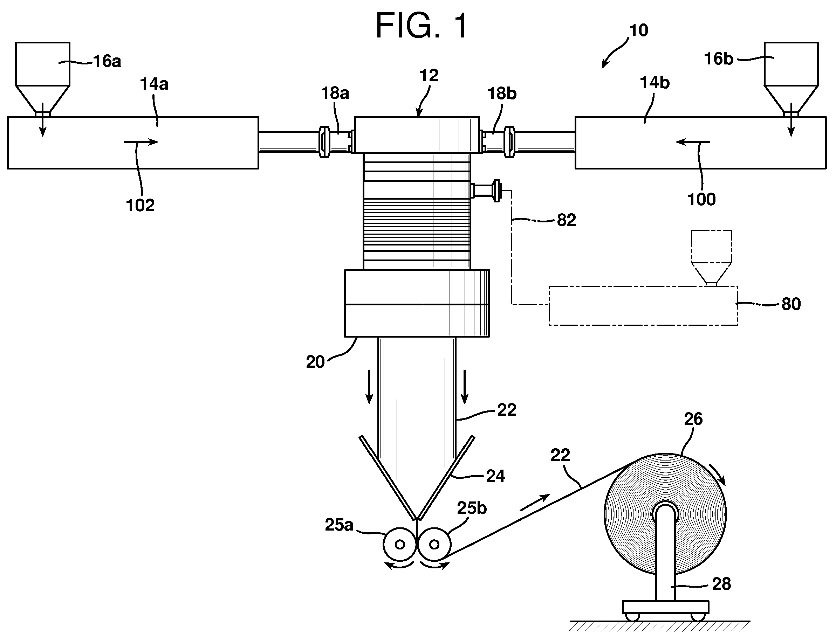

FIG. 1 schematically illustrates a system 10 in accordance with the present invention for coextruding a plurality of fluid layers. Such fluid layers typically comprise fluidized polymeric layers, which are in a fluid state by virtue of being molten, i.e., maintained at a temperature above the melting point of the polymer(s) used in each layer.

System 10 generally includes a die 12 and one or more extruders 14a and 14b in fluid communication with the die 12 to supply one or more fluidized polymers to the die. As is conventional, the polymeric materials may be supplied to the extruders 14a, b in the solid-state, e.g., in the form of pellets or flakes, via respective hoppers 16a, b. Extruders 14a, b are maintained at a temperature sufficient to convert the solid-state polymer to a molten state, and internal screws within the extruders (not shown) move the molten polymer into and through die 12 via respective pipes 18a, b. As will be explained in further detail below, within die 12, the molten polymer is converted into thin film layers, and each of the layers are superimposed, combined together, and expelled from the die at discharge end 20, i.e., "coextruded," to form a tubular, multilayer film 22. Upon emergence from the die 12 at discharge end 20, the tubular, multilayer film 22 is exposed to ambient air or a similar environment having a temperature sufficiently low to cause the molten polymer from which the film is formed to transition from a liquid state to a solid state. Additional cooling/quenching of the film may be achieved by providing a liquid quench bath (not shown), and then directing the film through such bath.

The solidified tubular film 22 is then collapsed by a convergence device 24, e.g., a V-shaped guide as shown, which may contain an array of rollers to facilitate the passage of film 22 therethrough. A pair of counter-rotating drive rollers 25a, b may be employed as shown to pull the film 22 through the convergence device 24. The resultant collapsed tubular film 22 may then be wound into a roll 26 by a film winding device 28 as shown. The film 22 on roll 26 may subsequently be unwound for use, e.g., for packaging, or for further processing, e.g., stretch-orientation, irradiation, or other conventional film-processing techniques, which are used to impart desired properties as necessary for the intended end-use applications for the film.

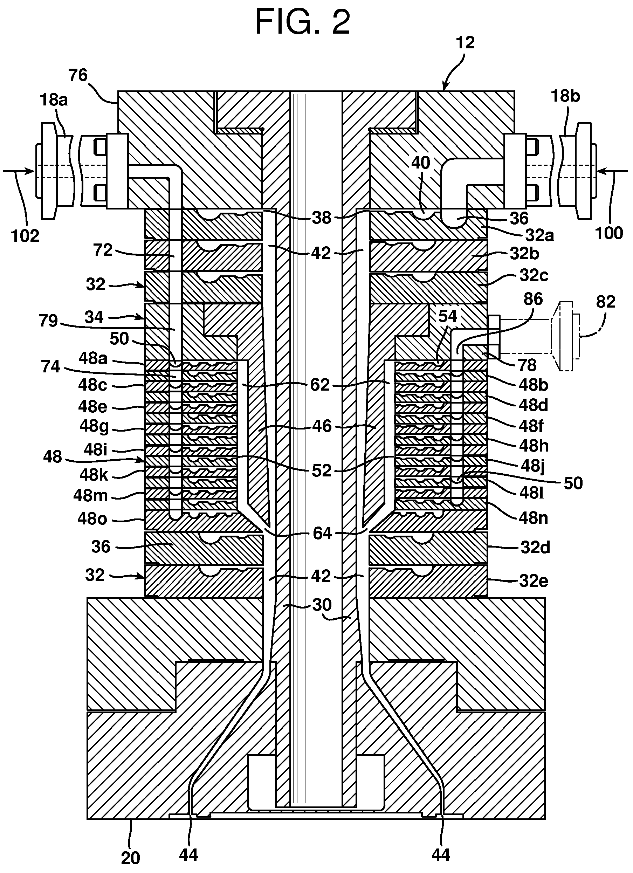

Referring now to FIG. 2, die 12 will be described in further detail. As noted above, die 12 is adapted to coextrude a plurality of fluid layers, and generally includes a primary forming stem 30, one or more distribution plates 32, and a microlayer assembly 34. In the presently illustrated die, five distribution plates 32 are included, as individually indicated by the reference numerals 32a-e. A greater or lesser number of distribution plates 32 may be included as desired. The number of distribution plates in die 12 may range, e.g., from one to twenty, or even more then twenty if desired.

Each of the distribution plates 32 has a fluid inlet 36 and a fluid outlet 38 (the fluid inlet is only shown in plate 32a). The fluid outlet 38 from each of the distribution plates 32 is in fluid communication with the primary forming stem 30, and also is structured to deposit a layer of fluid onto the primary forming stem. The distribution plates 32 may be constructed as described in U.S. Pat. No. 5,076,776. As described in the '776 patent, the distribution plates 32 may have one or more spiral-shaped fluid-flow channels 40 to direct fluid from the fluid inlet 36 and onto the primary forming stem 30 via the fluid outlet 38. As the fluid proceeds along the channel 40, the channel becomes progressively shallower such that the fluid is forced to assume a progressively thinner profile. The fluid outlet 38 generally provides a relatively narrow fluid-flow passage such that the fluid flowing out of the plate has a final desired thickness corresponding to the thickness of the fluid outlet 38. Other channel configurations may also be employed, e.g., a toroid-shaped channel; an asymmetrical toroid, e.g., as disclosed in U.S. Pat. No. 4,832,589; a heart-shaped channel; a helical-shaped channel, e.g., on a conical-shaped plate as disclosed in U.S. Pat. No. 6,409,953, etc. The channel(s) may have a semi-circular or semi-oval cross-section as shown, or may have a fuller shape, such as an oval or circular cross-sectional shape.

Distribution plates 32 may have a generally annular shape such that the fluid outlet 38 forms a generally ring-like structure, which forces fluid flowing through the plate to assume a ring-like form. Such ring-like structure of fluid outlet 38, in combination with its proximity to the primary forming stem 30, causes the fluid flowing through the plate 32 to assume a cylindrical shape as the fluid is deposited onto the stem 30. Each flow of fluid from each of the distribution plates 32 thus forms a distinct cylindrical "bulk" layer on the primary forming stem 30, i.e. layers that have greater bulk, e.g., thickness, than those formed from the microlayer assembly 34 (as described below).

The fluid outlets 38 of the distribution plates 32 are spaced from the primary forming stem 30 to form an annular passage 42. The extent of such spacing is sufficient to accommodate the volume of the concentric fluid layers flowing along the forming stem 30.

The order in which the distribution plates 32 are arranged in die 12 determines the order in which the fluidized bulk layers are deposited onto the primary forming stem 30. For example, if all five distribution plates 32a-e are supplied with fluid, fluid from plate 32a will be the first to be deposited onto primary forming stem 30 such that such fluid will be in direct contact with the stem 30. The next bulk layer to be deposited onto the forming stem would be from distribution plate 32b. This layer will be deposited onto the fluid layer from plate 32a. Next, fluid from plate 32c will be deposited on top of the bulk layer from plate 32b. If microlayer assembly 34 were not present in the die, the next bulk layer to be deposited would be from distribution plate 32d, which would be layered on top of the bulk layer from plate 32c. Finally, the last and, therefore, outermost bulk layer to be deposited would be from plate 32e. In this example (again, ignoring the microlayer assembly 34), the resultant tubular film 22 that would emerge from the die would have five distinct bulk layers, which would be arranged as five concentric cylinders bonded together.

Accordingly, it may be appreciated that the fluid layers from the distribution plates 32 are deposited onto the primary forming stem 30 either directly (first layer to be deposited, e.g., from distribution plate 32a) or indirectly (second and subsequent layers, e.g., from plates 32b-e).

As noted above, the tubular, multilayer film 22 emerges from die 12 at discharge end 20. The discharge end 20 may thus include an annular discharge opening 44 to allow the passage of the tubular film 22 out of the die. The die structure at discharge end 20 that forms such annular opening is commonly referred to as a "die lip." As illustrated, the diameter of the annular discharge opening 44 may be greater than that of the annular passage 42, e.g., to increase the diameter of the tubular film 22 to a desired extent. This has the effect of decreasing the thickness of each of the concentric layers that make up the tubular film 22, i.e., relative to the thickness of such layers during their residence time within the annular passage 42. Alternatively, the diameter of the annular discharge opening 44 may be smaller than that of the annular passage 42.

Microlayer assembly 34 generally comprises a microlayer forming stem 46 and a plurality of microlayer distribution plates 48. In the presently illustrated embodiment, fifteen microlayer distribution plates 48a-o are shown. A greater or lesser number of microlayer distribution plates 48 may be included as desired. The number of microlayer distribution plates 48 in microlayer assembly 34 may range, e.g., from one to fifty, or even more then fifty if desired. In many embodiments of the present invention, the number of microlayer distribution plates 48 in microlayer assembly 34 will be at least 10, e.g. 15, 20, 25, 30, 35, 40, 45, 50, etc., or any number of plates in between the foregoing numbers.

Each of the microlayer plates 48 has a fluid inlet 50 and a fluid outlet 52. The fluid outlet 52 from each of the microlayer plates 48 is in fluid communication with microlayer forming stem 46, and is structured to deposit a microlayer of fluid onto the microlayer forming stem. Similar to the distribution plates 32, the microlayer plates 48 may also be constructed as described in the above-incorporated U.S. Pat. No. 5,076,776.

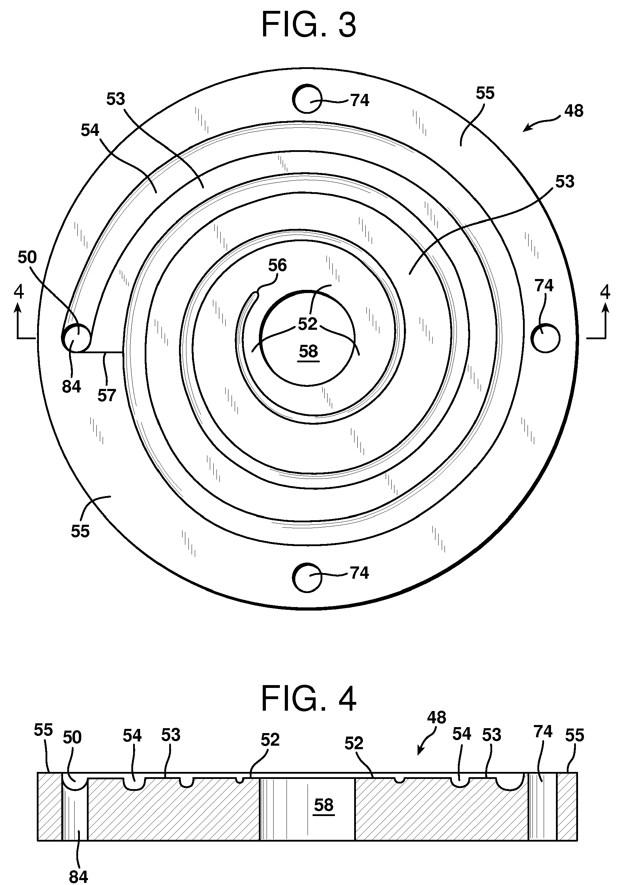

For example, as shown in FIG. 3, the microlayer plates 48 may have a spiral-shaped fluid-flow channel 54, which is supplied with fluid via fluid inlet 50. Alternatively, two or more fluid-flow channels may be employed in plate 48, which may be fed from separate fluid inlets or a single fluid inlet. Other channel configurations may also be employed, e.g., a toroid-shaped channel; an asymmetrical toroid, e.g., as disclosed in U.S. Pat. No. 4,832,589; a heart-shaped channel; a helical-shaped channel, e.g., on a conical-shaped plate as disclosed in U.S. Pat. No. 6,409,953; etc. The channel(s) may have a semi-circular or semi-oval cross-section as shown, or may have a fuller shape, such as an oval or circular cross-sectional shape.

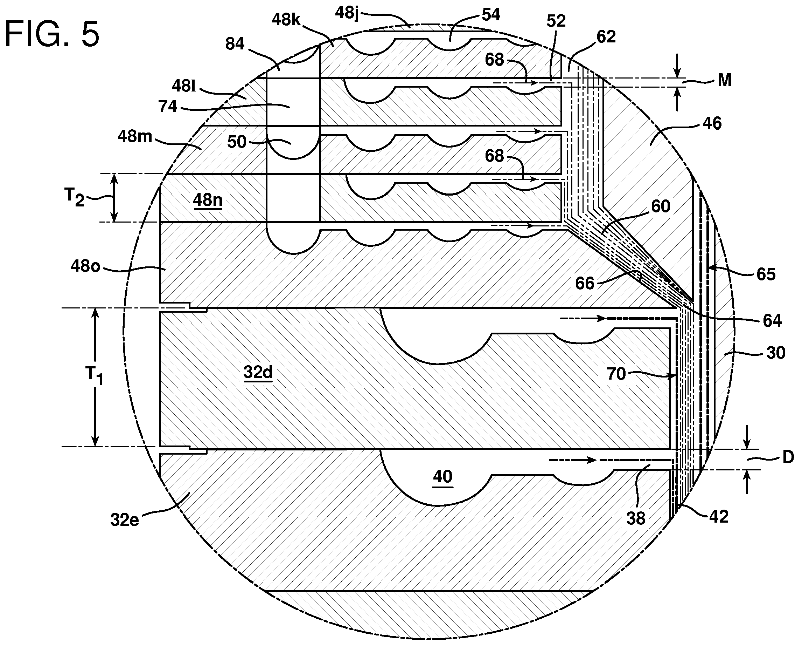

Regardless of the particular configuration or pattern that is selected for the flow channel(s) 54, its function is to connect the fluid inlet(s) 50 with the fluid outlet 52 in such a manner that the flow of fluid through the microlayer assembly 34 is converted from a generally stream-like, axial flow to a generally film-like, convergent radial flow towards the microlayer forming stem 46. Microlayer plate 48 as shown in FIG. 3 may accomplish this in two ways. First, the channel 54 spirals inwards towards the center of the plate, and thus directs fluid from the fluid inlet 50, located near the periphery of the plate, towards the fluid outlet 52, which is located near the center of the plate. Secondly, the channel 54 may be fashioned with a progressively shallower depth as the channel approaches the fluid outlet 52. This has the effect of causing some of the fluid flowing through the channel 54 to overflow the channel and proceed radially-inward toward the fluid outlet 52 in a relatively flat, film-like flow. Such radial-inward flow may occur in overflow regions 53, which may be located between the spaced-apart spiral sections of channel 54. As shown in FIG. 4, the overflow regions 53 may be formed as recessed sections in plate 48, i.e., recessed relative to the thicker, non-recessed region 55 at the periphery of the plate. As shown in FIG. 3, overflow regions 53 may begin at step-down 57 and, e.g., spiral inwards towards fluid outlet 52 between the spirals of channel 54. The non-recessed, peripheral region 55 abuts against the plate or other structure above the plate, e.g., as shown in FIGS. 2 and 5, and thus prevents fluid from flowing outside the periphery of the plate. In this manner, the non-recessed, peripheral region 55 forces fluid entering the plate to flow radially inward toward fluid outlet 52. Step-down 57 thus represents a line or zone of demarcation between the 'no-flow' peripheral region 55 and the 'flow' regions 53 and 54. The fluid that remains in the channel 54 and reaches the end 56 of the channel flows directly into the fluid outlet 52.

The fluid outlet 52 generally provides a relatively narrow fluid-flow passage and generally determines the thickness of the microlayer flowing out of the microlayer plate 48. The thickness of the fluid outlet 52, and therefore the thickness of the microlayer flowing therethrough, may be determined, e.g., by the spacing between the plate surface at outlet 52 and the bottom of the plate or other structure (e.g., manifold 76 or 78) immediately above the plate surface at outlet 52.

With continuing reference to FIGS. 2-3, each of the microlayer distribution plates 48 may have an orifice 58 extending through the plate. The orifice 58 may be located substantially in the center of each microlayer plate 48, with the fluid outlet 52 of each plate positioned adjacent to such orifice 58. In this manner, the microlayer forming stem 46 may extend through the orifice 58 of each of the microlayer distribution plates 48. With such a configuration, the microlayer distribution plates 48 may have a generally annular shape such that the fluid outlet 52 forms a generally ring-like structure, which forces fluid flowing through the plate to exit the plate in a radially-convergent, ring-like flow pattern. Such ring-like structure of fluid outlet 52, in combination with its proximity to the microlayer forming stem 46, causes the fluid exiting the microlayer plates 48 to assume a cylindrical shape as the fluid is deposited onto the microlayer stem 46. Each flow of fluid from each of the microlayer distribution plates 48 thus deposits a distinct cylindrical microlayer on the microlayer forming stem 46.

The microlayer plates 48 may be arranged to provide a predetermined order in which the microlayers are deposited onto the microlayer forming stem 46. For example, if all fifteen microlayer distribution plates 48a-o are supplied with fluid, a microlayer of fluid from plate 48a will be the first to be deposited onto microlayer forming stem 46 such that such microlayer will be in direct contact with the stem 46. The next microlayer to be deposited onto the forming stem would be from microlayer plate 48b. This microlayer will be deposited onto the microlayer from plate 48a. Next, fluid from microlayer plate 48c will be deposited on top of the microlayer from plate 48b, etc. The last and, therefore, outermost microlayer to be deposited is from plate 48o. In this manner, the microlayers are deposited onto the microlayer forming stem 46 in the form of a substantially unified, microlayered fluid mass 60 (see FIG. 5). In the present example, such microlayered fluid mass 60 would comprise up to fifteen distinct microlayers (at the downstream end of stem 46), arranged as fifteen concentric cylindrical microlayers bonded and flowing together in a predetermined order (based on the ordering of the microlayer plates 48a-o) on microlayer forming stem 46.

It may thus be appreciated that the fluid layers from the microlayer distribution plates 48 are deposited onto the microlayer forming stem 46 either directly (the first layer to be deposited, e.g., from microlayer plate 48a) or indirectly (the second and subsequent layers, e.g., from microlayer plates 48b-o). The orifices 58 in each of the microlayer plates 48 are large enough in diameter to space the fluid outlets 52 of the microlayer plates 48 sufficiently from the microlayer forming stem 46 to form an annular passage 62 for the microlayers (FIG. 2). The extent of such spacing is preferably sufficient to accommodate the volume of the concentric microlayers flowing along the microlayer stem 46.

In accordance with the present invention, microlayer forming stem 46 is in fluid communication with primary forming stem 30 such that the microlayered fluid mass 60 flows from the microlayer forming stem 46 and onto the primary forming stem 30. This may be seen in FIG. 5, wherein microlayered fluid mass 60 from microlayer assembly 34 is shown flowing from microlayer forming stem 46 and onto primary forming stem 30. Fluid communication between the microlayer stem 46 and primary stem 30 may be achieved by including in die 12 an annular transfer gap 64 between the annular passage 62 for the microlayer stem 46 and the annular passage 42 for the primary stem 30 (see also FIG. 2). Such transfer gap 64 allows the microlayered fluid mass 60 to flow out of the annular passage 62 and into the annular passage 42 for the primary forming stem 30. In this manner, the microlayers from microlayer plates 48 are introduced as a unified mass into the generally larger volumetric flow of the thicker fluid layers from the distribution plates 32.

The microlayer forming stem 46 allows the microlayers from the microlayer plates 48 to assemble into the microlayered fluid mass 60 in relative calm, i.e., without being subjected to the more powerful sheer forces of the thicker bulk layers flowing from the distribution plates 32. As the microlayers assemble into the unified fluid mass 60 on stem 46, the interfacial flow instabilities created by the merger of each layer onto the fluid mass 60 are minimized because all the microlayers have a similar degree of thickness, i.e., relative to the larger degree of thickness of the bulk fluid layers from distribution plates 32. When fully assembled, the microlayered fluid mass 60 enters the flow of the thicker bulk layers from distribution plates 32 on primary stem 30 with a mass flow rate that more closely approximates that of such thicker layers, thereby increasing the ability of the microlayers in fluid mass 60 to retain their physical integrity and independent physical properties.

As shown in FIG. 2, primary forming stem 30 and microlayer forming stem 46 may be substantially coaxially aligned with one another in die 12, e.g., with the microlayer forming stem 46 being external to the primary forming stem 30. This construction provides a relatively compact configuration for die 12, which can be highly advantageous in view of the stringent space constraints that exist in the operating environment of many commercial coextrusion systems.

Such construction also allows die 12 to be set up in a variety of different configurations to produce a coextruded film having a desired combination of bulk layers and microlayers. For example, one or more distribution plates 32 may be located upstream of the microlayer assembly 34. In this embodiment, fluidized bulk layers from such upstream distribution plates are deposited onto primary forming stem 30 prior to the deposition of the microlayered fluid mass 60 onto the primary stem 30. With reference to FIG. 2, it may be seen that distribution plates 32a-c are located upstream of microlayer assembly 34 in die 12. Bulk fluid layers 65 from such upstream distribution plates 32a-c are thus interposed between the microlayered fluid mass 60 and the primary forming stem 30 (see FIG. 5).

Alternatively, the microlayer assembly 34 may be located upstream of the distribution plates 32, i.e., the distribution plates may be located downstream of the microlayer assembly 34 in this alternative embodiment. Thus, the microlayers from the microlayer assembly 34, i.e., the microlayered fluid mass 60, will be deposited onto primary forming stem 30 prior to the deposition thereon of the bulk fluid layers from the downstream distribution plates 32. With reference to FIG. 2, it may be seen that microlayer assembly 34 is located upstream of distribution plates 32d-e in die 12. As shown in FIG. 5, the microlayered fluid mass 60 is thus interposed between the bulk fluid layer(s) 70 from such distribution plates 32d-e and the primary forming stem 30.

As illustrated in FIG. 2, the microlayer assembly 34 may also be positioned between one or more upstream distribution plates, e.g., plates 32a-c, and one or more downstream distribution plates, e.g., plates 32d-e. In this embodiment, fluid(s) from upstream plates 32a-c are deposited first onto primary stem 30, followed by the microlayered fluid mass 60 from the microlayer assembly 34, and then further followed by fluid(s) from downstream plates 32d-e. In the resultant multilayered film, the microlayers from microlayer assembly 34 are sandwiched between thicker, bulk layers from both the upstream plates 32a-c and the downstream plates 32d-e.

In many embodiments of the invention, most or all of the microlayer plates 48 have a thickness that is less than that of the distribution plates 32. Thus, for example, the distribution plates 32 may have a thickness T₁ (see FIG. 5) ranging from about 1.3 to about 5.1 cm (about 0.5 to about 2 inches). The microlayer distribution plates 48 may have a thickness T₂ ranging from about 0.3 to about 1.3 cm (about 0.1 to about 0.5 inch). Such thickness ranges are not intended to be limiting in any way, but only to illustrate typical examples. All distribution plates 32 will not necessarily have the same thickness, nor will all of the microlayer plates 48. For example, microlayer plate 48o, the most downstream of the microlayer plates in the assembly 34, may be thicker than the other microlayer plates to accommodate a sloped contact surface 66, which may be employed to facilitate the transfer of microlayered fluid mass 60 through the annular gap 64 and onto the primary forming stem 30.

As also shown in FIG. 5, each of the microlayers flowing out of the plates 48 has a thickness "M" corresponding to the thickness of the fluid outlet 52 from which each microlayer emerges. The microlayers flowing from the microlayer plates 48 are schematically represented in FIG. 5 by the phantom arrows 68.

Similarly, each of the relatively thick bulk layers flowing out of the plates 32 has a thickness "D" corresponding to the thickness of the fluid outlet 38 from which each such layer emerges (see FIG. 5). The thicker/bulk layers flowing from the distribution plates 32 are schematically represented in FIG. 5 by the phantom arrows 70.

Generally, the thickness M of the microlayers will be less than the thickness D of the bulk layers from the distribution plates 32. The thinner that such microlayers are relative to the bulk layers from the distribution plates 32, the more of such microlayers that can be included in a multilayer film, for a given overall film thickness. Microlayer thickness M from each microlayer plate 48 will generally range from about 12.7 to 635 µm (about 0.5-25 mils (1 mil = 0.001 inch)). Thickness D from each distribution plate 32 will generally range from about 508 to 2540 µm (20-100 mils), but can sometimes be as thin as about 25.4 µm (1 mil).

The ratio of M:D may range from about 1:1 to about 1:8. Thickness M may be the same or different among the microlayers 68 flowing from microlayer plates 48 to achieve a desired distribution of layer thicknesses in the microlayer section of the resultant film. Similarly, thickness D may be the same or different among the thicker bulk layers 70 flowing from the distribution plates 32 to achieve a desired distribution of layer thicknesses in the bulk-layer section(s) of the resultant film.

The layer thicknesses M and D will typically change as the fluid flows downstream through the die, e.g., if the melt tube is expanded at annular discharge opening 44 as shown in FIG. 2, and/or upon further downstream processing of the tubular film, e.g., by stretching, orienting, or otherwise expanding the tube to achieve a final desired film thickness and/or to impart desired properties into the film. The flow rate of fluids through the plates will also have an effect on the final downstream thicknesses of the corresponding film layers.

As described above, the distribution plates 32 and microlayer plates 48 preferably have an annular configuration, such that primary forming stem 30 and microlayer stem 46 pass through the center of the plates to receive fluid that is directed into the plates. The fluid may be supplied from extruders, such as extruders 14a, b. The fluid may be directed into the die 12 via vertical supply passages 72, which receive fluid from feed pipes 18, and direct such fluid into the die plates 32 and 48. For this purpose, the plates may have one or more through-holes 74, e.g., near the periphery of the plate as shown in FIG. 3, which may be aligned to provide the vertical passages 72 through which fluid may be directed to one or more downstream plates.

Although three through-holes 74 are shown in FIG. 3, a greater or lesser number may be employed as necessary, e.g., depending upon the number of extruders that are employed. In general, one supply passage 72 may be used for each extruder 14 that supplies fluid to die 12. The extruders 14 may be arrayed around the circumference of the die, e.g., like the spokes of a wheel feeding into a hub, wherein the die is located at the hub position.

With reference to FIGS. 1 and 2, die 12 may include a primary manifold 76 to receive the flow of fluid from the extruders 14 via feed pipes 18, and then direct such fluid into a designated vertical supply passage 72, in order to deliver the fluid to the intended distribution plate(s) 32 and/or microlayer plate(s) 48. The microlayer assembly 34 may optionally include a microlayer manifold 78 to receive fluid directly from one or more additional extruders 80 via feed pipe 82 (shown in phantom in FIG. 1).

In the example illustrated in FIGS. 1-2, extruder 14b delivers a fluid, e.g., a first molten polymer, directly to the fluid inlet 36 of distribution plate 32a via pipe 18b and primary manifold 76. In the presently illustrated embodiment, distribution plate 32a receives all of the output from extruder 14b, i.e., such that the remaining plates and microlayer plates in the die 12 are supplied, if at all, from other extruders. Alternatively, the fluid inlet 36 of distribution plate 32a may be configured to contain an outlet port to allow a portion of the supplied fluid to pass through to one or more additional plates, e.g., distribution plates 32 and/or microlayer plates 48, positioned downstream of distribution plate 32a.

For example, as shown in FIGS. 3-4 with respect to the illustrated microlayer plate 48, an outlet port 84 may be formed in the base of the fluid inlet 50 of the plate. Such outlet port 84 allows the flow of fluid delivered to plate 48 to be split: some of the fluid flows into channel 54 while the remainder passes through the plate for delivery to one or more additional downstream plates 48 and/or 32. A similar outlet port can be included in the base of the fluid inlet 36 of a distribution plate 32. Delivery of fluid passing through the outlet port 84 (or through a similar outlet port in a distribution plate 32) may be effected via a through-hole 74 in an adjacent plate (see FIG. 5), or via other means, e.g., a lateral-flow supply plate, to direct the fluid in an axial, radial, and/or tangential direction through die 12 as necessary to reach its intended destination.

Distribution plates 32b-c are being supplied with fluid via extruder(s) and supply pipe(s) and/or through-holes that are not shown in FIG. 2. The bulk fluid flow along primary forming stem 30 from distribution plates 32a-c is shown in FIG. 5, as indicated by reference numeral 65.

As shown in FIGS. 1-2, microlayer assembly 34 is being supplied with fluid by extruders 14a and 80. Specifically, microlayer plates 48a, c, e, g, i, k, m, and o are supplied by extruder 14a via supply pipe 18a and vertical pipe and/or passage 72. Microlayer plates 48b, d, f, h, j, l, and n are supplied with fluid by extruder 80 via feed pipe 82 and a vertical supply passage 86. In the illustrated embodiment, vertical passage 86 originates in microlayer manifold 78 and delivers fluid only within the microlayer assembly 34. In contrast, vertical passage 72 originates in manifold 76, extends through distribution plates 32a-c (via aligned through-holes 74 in such plates), then further extends through manifold 78 via manifold passage 79 before finally arriving at microlayer plate 48a.

Fluid from extruder 14a and vertical passage 72 enters microlayer plate 48a at fluid inlet 50. Some of the fluid passes from inlet 50 and into channel 54 (for eventual deposition on microlayer stem 46 as the first microlayer to be deposited on stem 46), while the remainder of the fluid passes through plate 48a via outlet port 84. Microlayer plate 48b may be oriented, i.e., rotated, such that a through-hole 74 is positioned beneath the outlet port 84 of microlayer plate 48a so that the fluid flowing out of the outlet port 84 flows through the microlayer plate 48b, and not into the channel 54 thereof. Microlayer plate 48c may be positioned such that the fluid inlet 50 thereof is in the same location as that of microlayer plate 48a so that fluid flowing out of through-hole 74 of microlayer plate 48b flows into the inlet 50 of plate 48c. Some of this fluid flows into the channel 54 of plate 48c while some of the fluid passes through the plate via outlet port 84, passes through a through-hole 74 in the next plate 48d, and is received by fluid inlet 50 of the next microlayer plate 48e, where some of the fluid flows into channel 54 and some passes out of the plate via outlet port 84. Fluid from extruder 14a continues to be distributed to remaining plates 48g, i, k, and m in this manner, except for microlayer plate 48o, which has no outlet port 84 so that fluid does not pass through plate 48o, except via channel 54 and fluid outlet 52.

In a similar manner, fluid from extruder 80 and vertical passage 86 passes through microlayer plate 48a via a through-hole 74 and then enters microlayer plate 48b at fluid inlet 50 thereof. Some of this fluid flows through the channel 54 and exits the plate at outlet 52, to become the second microlayer to be deposited onto microlayer stem 46 (on top of the microlayer from plate 48a), while the remainder of the fluid passes through the plate via an outlet port 84. Such fluid passes through microlayer plate 48c via a through-hole 74, and is delivered to plate 48d via appropriate alignment of its inlet 50 with the through-hole 74 of plate 48c. This fluid-distribution process may continue for plates 48f, h, j, and l, until the fluid reaches plate 48n, which has no outlet port 84 such that fluid does not pass through this plate except via its fluid outlet 52.

In this manner, a series of microlayers comprising alternating fluids from extruders 14a and 80 may be formed on microlayer stem 46. For example, if extruder 14a supplied EVOH and extruder 80 supplied PA6, the resultant microlayered fluid mass 60 would have the structure:
EVOH/PA6/EVOH/PA6/EVOH/PA6/EVOH/PA6/EVOH/PA6/EVOH/PA6/EVOH/PA6/EVOH

The fluids from extruders 14a and 80 may be the same or different such that the resultant microlayers in microlayered fluid mass 60 may have the same or a different composition. Only one extruder may be employed to supply fluid to the entire microlayer assembly 34, in which case all of the resultant microlayers will have the same composition. Alternatively, three or more extruders may be used to supply fluid to the microlayer assembly 34, e.g., with each supplying a different fluid, e.g., polymer "a," polymer "b," and polymer "c," respectively, such that three different microlayer compositions are formed in microlayered fluid mass 60, in any desired order, to achieve any desired layer-combination, e.g., abcabc; abbcabbc; abacabac; etc.

Similarly, the fluid(s) directed through the distribution plate(s) 32 may be substantially the same as the fluid(s) directed through the microlayer assembly 34. Alternatively, the fluid(s) directed through the distribution plate(s) 32 may be different from the fluid(s) directed through the microlayer assembly. The resultant tubular film may have bulk layers and microlayers that have substantially the same composition. Alternatively, some of the bulk layers from distribution plates 32 may be the same as some or all of the microlayers from microlayer plates 48, while other bulk layers may be different from some or all of the microlayers.

In the illustrated example, the extruders and supply passages for distribution plates 32d-e are not shown. One or both of such plates may be supplied from extruder 14a, 14b, and/or 80 by appropriate arrangement of vertical supply passages 72, 86, through-holes 74, and/or outlet ports 84 of the upstream distribution plates 32 and/or microlayer plates 48. Alternatively, one or both distribution plates 32d-e may not be supplied at all, or may be supplied from a separate extruder, such as an extruder in fluid communication with primary manifold 76 and a vertical supply passage 72 that extends through distribution plates 32a-c and microlayer assembly 34, e.g., via appropriate alignment of the through-holes 74 of plates 32a-c and microlayer assembly 34 to create a fluid transport passage through die 12, leading to fluid inlet 36 of distribution plate 32d and/or 32e.

If desired, one or more of the distribution plates 32 and/or microlayer plates 48 may be supplied with fluid directly from one or more extruders, i.e., by directing fluid directly into the fluid inlet of the plate, e.g., from the side of the plate, without the fluid being first routed through one of manifolds 76 or 78 and/or without using a vertical supply passage 72, 86. Such direct feed of one or more plates 32 and/or 48 may be employed as an alternative or in addition to the use of manifolds and vertical supply passages as shown in FIG. 2.

The inventor has discovered that the system 10 is particularly advantageous when used to make multi-segment films having two or more segments, e.g., plies, wherein one segment comprises an oxygen-barrier material. Such films find particular utility when used to package food products such as bone-in meats, especially when such films are subjected to an orientation process that renders them shrinkable upon exposure to heat. Surprisingly, it was discovered that the inclusion of a plurality of microlayers in such films results in an increased degree of free shrink, and therefore package tightness, relative to otherwise-identical films that do not contain microlayers. For food packaging, particularly fresh meat, package tightness is a highly desirable feature, in that it minimizes meat purge (accumulation of meat juice between the surface of the meat and the packaging film), and otherwise provides for a more aesthetically-pleasing package appearance.

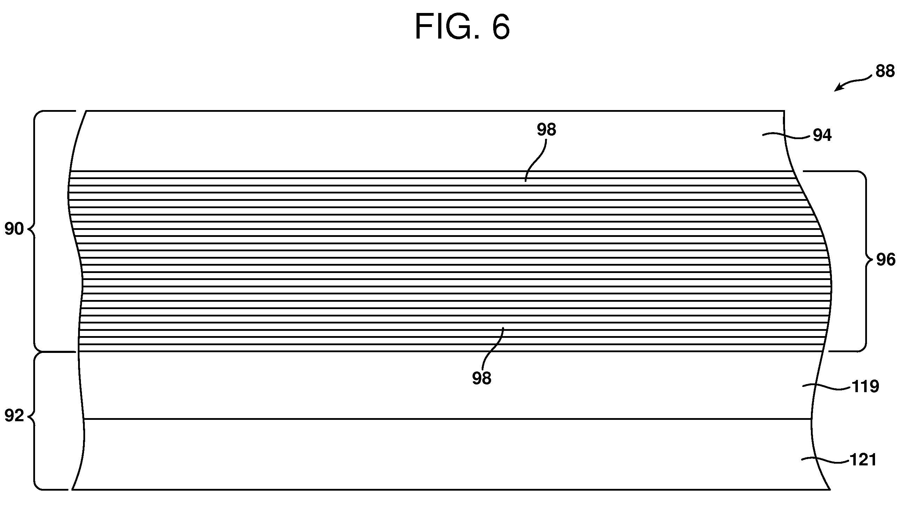

With reference to FIG. 6, multi-segment, heat-shrinkable films 88 in accordance with the present invention generally comprise a first segment 90 and a second segment 92. The first segment 90 comprises a bulk layer 94 and a microlayer section 96 comprising a plurality of microlayers 98. The second segment 92 is joined to the first segment 90, and has an oxygen transmission rate of no more than about 100 cc/m²-atm.-24 hrs. (at 23°C (73°F) and 0% relative humidity). The multi-segment film 88 is subjected to an orientation process under conditions that impart heat-shrinkability to the film, such that the film has a total free shrink (ASTM D2732-08) of at least about 30% at 85°C (185°F).

The first segment 90 is preferably a coextruded, multilayer film, which may be produced by system 10 as follows. Bulk layer 94 of first segment 90 may be formed by directing a molten polymer or polymer mixture 100 through extruder 14b and distribution plate 32a of die 12, and then onto primary forming stem 30 as shown in FIGS. 1, 2 and 9. In this embodiment, the molten polymer 100 would constitute the entirety of the bulk fluid 65 flowing in tubular fashion along primary forming stem 30 from distribution plates 32a-c, i.e., with no polymer being supplied to distribution plates 32b-c. Upon emergence from discharge end 20 of die 12, the molten polymer 100 solidifies, thereby transforming from molten polymeric fluid layer 100 and into bulk film layer 94, which is depicted in FIG. 6.

At least a second molten polymer or polymer mixture 102 may be directed through extruder 14a and microlayer assembly 34, e.g., via vertical passage 72, to form microlayered fluid mass 60 on microlayer forming stem 46. The microlayered fluid mass 60 is then directed from microlayer forming stem 46 and onto primary forming stem 30. Upon emergence from the discharge end 20 of die 12, the microlayered fluid mass 60 solidifies, thereby transforming from molten, polymeric, microlayered fluid mass 60 and into microlayer section 96, which contains a plurality of solidified microlayers 98 as shown in FIG. 6. In this embodiment, all of the microlayers 68 are being supplied with second polymer 102 by extruder 14a to form microlayered fluid mass 60. In other embodiments, some, e.g., every other, of the microlayers 68 may be supplied by extruder 80, with the same second polymer 102 or a different polymer.

The second polymer 102 may be substantially the same as the first polymer 100, such that the composition of the bulk layer 94 may be substantially the same as that of the microlayers 60. Alternatively, the second polymer 102 may be different from the first polymer 100, such that the composition of the bulk layer 94 may be different from that of the microlayers 60.

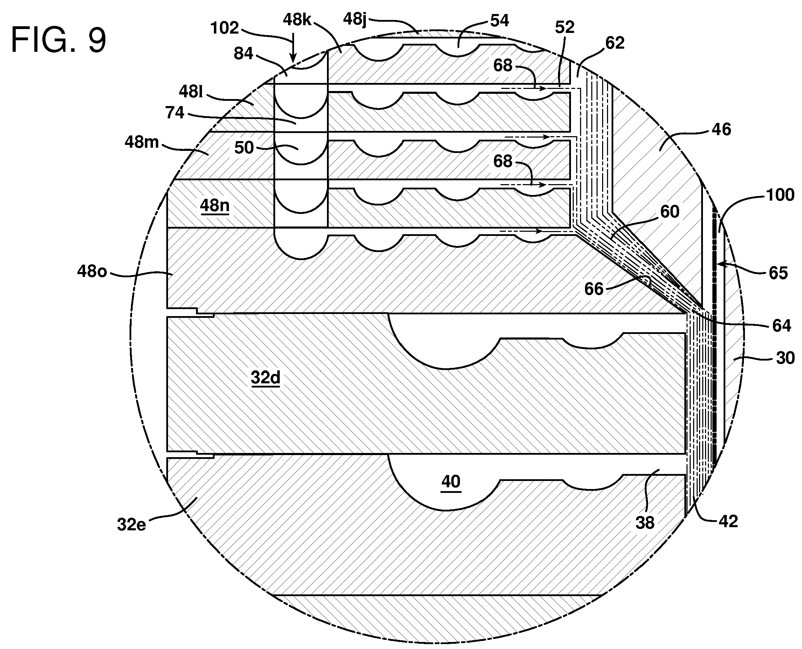

Within die 12, the microlayered fluid mass 60 merges with molten polymer layer 100 (FIG. 9), thereby forming tubular, multilayer film 22 (FIG. 1) as a relatively thick "tape" extrudate, which, in this embodiment, comprises the microlayered fluid mass 60 and the molten bulk polymer layer 100 as an integrated structure. As the coextruded, tubular multilayer "tape" 22 emerges from the discharge end 20 of die 12, it is quenched, e.g., by immersing the tube in water, contacting the tube with water spray or cool air, etc. In this manner, the "tape" 22 is converted into first film segment 90 (FIG. 6).

The second segment 92 may include one or more oxygen-barrier layers 119, which comprises an oxygen-barrier polymer such as a polymer or copolymer comprising vinylidene chloride, ethylene/vinyl alcohol (EVOH), polyamide, polyester, etc. Second segment 92 may also contain one or more bulk layers, e.g., layer 121, which serves to protect the oxygen-barrier layer 119.

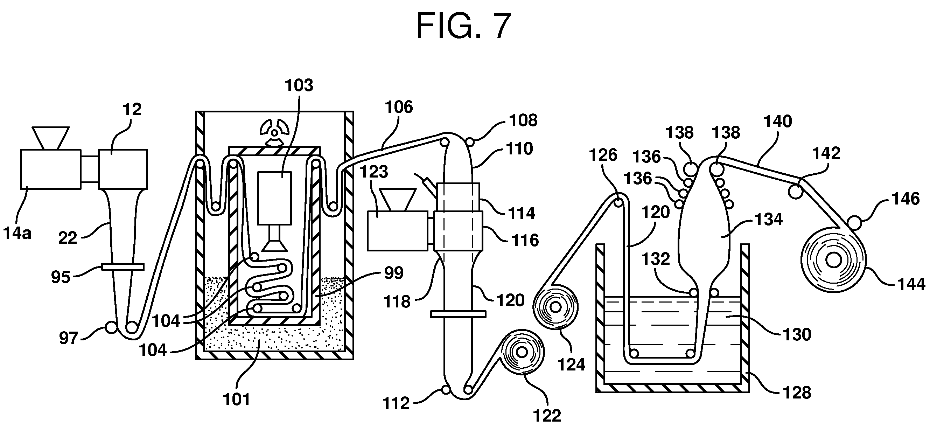

First film segment 90 may be joined to second film segment 92 via any conventional technique, e.g., coextrusion, lamination, or extrusion-coating. In some embodiments, an extrusion-coating technique is preferred. This is the case, for example, when it is desired to both induce cross-linking in multi-segment film 88, in order to improve the physical property characteristics thereof, and to employ in second film segment 92 an oxygen-barrier material such as a polymer or copolymer of vinylidene chloride (PVDC), which is not amenable to certain cross-linking techniques, such as exposure to ionizing radiation. In the case of PVDC, exposure to ionizing radiation causes the polymer to degrade and release HCl gas. Accordingly, when it is desired to both employ PVDC as an oxygen-barrier material in second film segment 92, and induce cross-linking multi-segment film 88 via ionizing radiation, the extrusion-coating technique described below and illustrated in FIG. 7 is desirable. Such technique, for example, allows multi-segment film 88 to be constructed such that the first segment 90 comprises at least one layer comprising cross-linked polymer, e.g., by exposing the first segment 90 to ionizing radiation, and the second segment 92 is not cross-linked and comprises at least one layer comprising a polymer or copolymer comprising vinylidene chloride. This combination is desirable because PVDC is an excellent oxygen-barrier material and cross-linking results in a stronger film. As will now be described, such combination can be realized by extrusion-coating the second segment 92 onto the first segment 90, which allows the first segment 90 to be exposed to ionizing radiation prior to being joined to the PVDC-containing second segment 92, which preferably has not been exposed to ionizing radiation.

FIG. 7 illustrates a schematic of an extrusion-coating process that may be used to produce the multi-segment film shown in FIG. 6. In the process illustrated in FIG. 7, solid polymer beads (not illustrated) are fed to a plurality of extruders 14 and 80 as described above (for simplicity, only extruder 14a is illustrated). The resultant polymer melts are forwarded into die 12, and extruded therethrough, resulting in tubular, multilayer film 22 which, as also described above, comprises the microlayered fluid mass 60 and the molten bulk polymer layer 100 as an integrated structure, ultimately becoming first film segment 90 in the final multi-segment film 88. The tube 22 may have a wall thickness of 254 to 762 µm (10-30 mils), e.g., 381 to 635 µm (15-25 mils).

After cooling and quenching, e.g., by water spray from cooling ring 95, tubing 22 is collapsed by pinch rolls 97, and is thereafter fed through irradiation vault 99 surrounded by shielding 101, wherein tubing 22 is irradiated with high energy electrons (i.e., ionizing radiation) from, e.g., an iron core transformer accelerator 103. Tubing 22 is guided through irradiation vault 99 on rollers 104. Tubing 22 may be irradiated to a level, e.g., ranging from about 10,000 to 200,000 Gy (1-20 megarads (MR)).

After irradiation, tubing 22 becomes irradiated tubing 106, which is directed through pinch rolls 108, following which tubing 106 is slightly inflated, resulting in trapped bubble 110. At trapped bubble 110, the tubing is not significantly drawn longitudinally, as the surface speed of nip rolls 112 are about the same speed as nip rolls 108. Furthermore, irradiated tubing 106 is inflated only enough to provide a substantially circular tubing without significant transverse orientation, i.e., without stretching.

Slightly inflated, irradiated tubing 106 is passed through vacuum chamber 114, and thereafter forwarded through coating die 116, at which the second film segment 92, in the form of a second tubular film 118, is joined to the first film segment/irradiated tubing 106. Second tubular film 118 is melt extruded from coating die 116 and coated onto slightly inflated, irradiated tube 106, to form two-segment tubular film 120. Second tubular film 118 may be a coextruded structure, comprising oxygen-barrier layer 119 and outer layer 121 (see FIG. 6), ultimately forming the second film segment 92 in the final multi-segment film 88. Polymer beads, e.g., comprising PVDC, may be supplied to extruder 123 wherein they are melted, and then extruded by coating die 116 to form oxygen-barrier layer 119. A separate extruder (not shown) may be employed to supply coating die 116 with polymer to form outer layer 121. Alternatively, a separate coating die positioned downstream from coating die 116 may be employed to extrusion-coat outer layer 121 onto oxygen-barrier layer 119. Further details of the above-described coating step(s) are generally as set forth in U.S. Pat. Nos. 4,082,829 and 4,278,738.

After irradiation and coating, the resultant two-segment tubing film 120 may be wound up onto windup roll 122. Thereafter, windup roll 122 is removed and installed as unwind roll 124, on a second stage in the process of making the multi-segment tubing film 88 as ultimately desired. Two-segment tubular film 120, from unwind roll 124, or directly from nip rolls 112 (with no rolls 122, 124) is passed over guide roll 126, after which two-segment tubular film 120 passes into hot water bath tank 128 containing water 130. The now-collapsed, irradiated, coated tubular film 120 is submersed in hot water 130 (which may have a temperature ranging from about 190 to about 210°F) for a retention time of at least about 5 seconds, i.e., for a time period in order to bring the film up to the desired temperature for biaxial orientation. Thereafter, irradiated tubular film 120 is directed through nip rolls 132, and bubble 134 is blown, thereby transversely stretching tubular film 120. Furthermore, while being blown, i.e., transversely stretched, nip rolls 138 draw tubular film 120 in the longitudinal direction, as nip rolls 138 have a surface speed higher than the surface speed of nip rolls 132. As a result of the transverse stretching and longitudinal drawing, irradiated, coated, biaxially-oriented blown tubing film 140 is produced, this blown tubing preferably having been both transversely stretched in a ratio of from about 1:1.5 to about 1:6 (TD or transverse direction), and drawn in a ratio of from about 1:1.5 to about 1:6 (LD or longitudinal direction). More preferably, the stretching and drawing are each performed a ratio of from about 1:2 to about 1:5. While bubble 134 is maintained between pinch rolls 132 and 138, blown tubing 140 is collapsed by rolls 136, and thereafter conveyed through pinch rolls 138 and across guide roll 142, and then rolled onto wind-up roll 144. Idler roll 146 may be included to assure a good wind-up.

The resultant tubing 140 thus forms multi-segment film 88, a cross-sectional tube-wall view of which is shown in FIG. 6. Such film may have a total thickness of from about 1 to about 5 mils.

The polymer components used to fabricate multi-segment films according to the present invention may also contain appropriate amounts of other additives normally included in such compositions. These include slip agents such as talc, antioxidants, fillers, dyes, pigments, radiation stabilizers, antistatic agents, elastomers, and other additives that are known to those of skill in the art of packaging films.

In addition to iron core transformer accelerators as described above, other accelerators, such as a Vander Graff or resonating transformers, may be used in addition or instead. The radiation is not limited to electrons from an accelerator; almost any ionizing radiation may be used to induce cross-linking in tube 22/first film segment 90. A standard unit to express the amount of ionizing radiation is the rad, which is defined as the amount of radiation which will result in the absorption of 100 ergs of energy per gram of irradiated material. The megarad, "MR," is one million rads. The ionizing radiation crosslinks the polymers in the tube 22/first film segment 90.

The film may be irradiated at a level of from about 20,000 to about 150,000 Gy (about 2 to about 15 MR), e.g., 20,000 to 100,000 Gy (2-10 MR).

Other techniques may also be used to produce the multi-segment film 88. For example, the first and second segments 90, 92 may be coextruded together in the same die, e.g., die 12, wherein the second segment 92 is supplied by one or more distribution plates 32, e.g., downstream distribution plates 32d and/or e. If an oxygen-barrier material such as, e.g., EVOH, polyamide, or polyester is selected for inclusion in second segment 92, the entire, fully coextruded multi-segment film 88 could be subjected to ionizing radiation in order to induce cross-linking of the polymers therein.

As noted above, the multi-segment films 88 in accordance with the present invention are stretch-oriented under conditions that impart heat-shrinkability to the film. Such conditions generally include reheating the multilayer "tape" to a temperature within its orientation temperature range, and then stretching the tape, e.g., as a blown bubble, to orient (align) the crystallites and/or molecules of the material, followed by quenching the film while substantially retaining its stretched dimensions to rapidly cool the film and thus lock-in the oriented molecular configuration. As a result, the film 88 has a total free shrink (ASTM D2732-08) of at least about 30% at 85°C (185°F), such as, at 85°C (185°F): at least about 35%, at least about 40%, at least about 50%, at least about 60%, at least about 70%, at least about 80%, etc. As explained above, a relatively high degree of free shrink in a film is beneficial for meat-packaging applications, in that such film will tend to provide close film-to-meat contact, thereby minimizing meat purge and otherwise providing for a more aesthetically-pleasing package appearance.

Total free shrink is the sum of the free shrink in both the TD and LD, as tested per ASTM D2732-08. As demonstrated in the Examples below, multi-segment, heat-shrinkable films in accordance with the present invention, i.e., which have at least one microlayer section, were surprisingly found to have a higher degree of free shrink than comparative films in which a bulk layer of the same or similar composition was used in place of the microlayer section. Although not wishing to be bound by theory, it is believed that such beneficial increases in free shrink was due to the presence of the microlayers, which appeared to allow the films to be oriented at lower temperatures than their comparative counterpart films (compare, e.g., inventive Examples 5-11 with Comparative Examples 1-4).

Generally, multi-segment films 88 may have an orientation ratio of at least about 2 (i.e., 1:2 or greater), as measured in at least one direction along a length (LD) or width (TD) dimension of the film, e.g., such as an orientation ration of at least about 2.5, at least about 3, etc.

As may be appreciated, due to the stretching of the multi-segment tube 120, the tube-wall thickness of the resultant multi-segment film 88 is significantly less than that of the tube 120. For example, while the tube 120 may have a thickness ranging from about 127 to about 1270 µm (about 5 to about 50 mils), in many embodiments of the invention, the multi-segment film 88 will have a thickness of less than 127 µm (5 mils), such as 102 µm (4 mils) or less, 76 µm (3 mils) or less, 51 µm (2 mils) or less, etc.

In accordance with the present invention, each of the microlayers 98 in multi-segment film 88 have a thickness that is significantly less than that of the bulk layers in the film, i.e., those produced by the relatively thick distribution plates 32. For example, the ratio of the thickness of any of the microlayers 98 to the thickness of bulk layer 94 may be at least about 1:2, such as at least about 1:3, 1:4, 1:5, 1:6, 1:7, 1:8, 1:9, 1:10, 1:11, 1:12, 1:13, 1:14, 1:15, 1:16, 1:17, 1:18, 1:19, 1:20, etc., for example ranging from 1:2 - 1:50, 1:3 - 1:40, 1:4 - 1:35, 1:5 - 1:30, etc. (see, e.g., FIG. 6). The same thickness ratio range may apply to each of the microlayers 98 relative any other bulk layers in multi-segment film 88. Each of the microlayers 98 may have a thickness ranging from about 0.025 to about 2.5 µm (about 0.001 to about 0.1 mil), while bulk layer 94 may have a thickness ranging from about 1.3 to about 64 µm (about 0.05 to about 2.5 mils). For example, in some embodiments of the invention, it is beneficial for the microlayers 98 to have a thickness of less than about 1.3 µm (0.05 mil) (see Examples 12-13).

Multi-segment film 88, as illustrated in FIG. 6, is representative of many of the inventive shrink films described in the Examples below, in that such films have a total of twenty five (25) microlayers 98 in the core of the film. The die used to make such films was essentially as illustrated in FIG. 2, except that twenty five (25) microlayer plates 48 were included in the microlayer assembly 34. For simplicity of illustration, only fifteen (15) microlayer plates 48 are shown in the microlayer assembly 34 of die 12 in FIG 2. Generally, the microlayer section 96 comprises at least 10 microlayers, such as at least: 11 layers, 12, 13, 14, 15, 16, 17, 18, 19, 20 layers, etc., or more, e.g., at least 20 microlayers, at least: 25, 30, 35, 40, 45, or 50 microlayers, or more than 50 microlayers, e.g., numbering in the hundreds or even thousands, as desired.

Each of the microlayers 98 may have substantially the same composition. This would be the case, e.g., if all microlayer plates 48 were supplied with polymer by extruder 14a. Alternatively, at least one of the microlayers 98 may have a composition that is different from the composition of at least one other of the microlayers, i.e., two or more of the microlayers may have compositions that are different from one other. This can be accomplished, e.g., by employing extruder 80 to supply a different polymer (i.e., different from the polymer supplied by extruder 14a) to at least one of the microlayer plates 48. Thus, as shown in FIGS. 1 and 2, extruder 14a may supply the "odd" microlayer plates (i.e., plates 48a, c, e, etc.) with one type of polymeric composition, e.g., "composition A," while extruder 80 supplies the "even" microlayer plates (i.e., plates 48b, d, f, etc.) with another type of polymeric composition, e.g., "composition B," such that the microlayer section 96 will comprise alternating microlayers of "A" and "B", i.e., ABABAB.... A third extruder supplying a polymeric composition "C" could also be employed, e.g., to provide a repeating "ABC" ordering of the microlayers, i.e., ABCABC.... Numerous other variations are, of course, possible.

Each of the microlayers 98 in multi-segment film 88 may have substantially the same thickness. Alternatively, at least one of the microlayers may have a thickness that is different from the thickness of at least one other of the microlayers, e.g., as shown in Example 30 below. The thickness of the microlayers 98 will be determined by a number of factors, including the construction of the microlayer plates, e.g., the spacing "M" of the fluid outlet 52 (FIG. 5), the mass flow rate of fluidized polymer that is directed through each plate, the degree of stretching to which the tube 120 is subjected during orientation, etc.

If desired, all of the microlayers 98 may comprise a single polymer. Alternatively, at least one of the microlayers 98 may comprise a blend of two or more polymers.

Generally, in the production of multi-segment films in accordance with the present invention, the fluid layers coextruded by die 12, including both the bulk layers and microlayers in first segment 90, and the layers of the second segment 92, may comprise one or more molten thermoplastic polymers alone or as a blend of two or more polymers. Examples of such polymers include polyolefins, polyesters (e.g., PET and PETG), polystyrenes, (e.g., modified styrenic polymers such as SEBS, SBS, etc.), polyamide homopolymers and copolymers (e.g. PA6, PA12, PA6/12, etc.), polycarbonates, etc. Within the family of polyolefins, various polyethylene homopolymers and copolymers may be used, as well as polypropylene homopolymers and copolymers (e.g., propylene/ethylene copolymer). Polyethylene homopolymers may include low density polyethylene (LDPE) and high density polyethylene (HDPE). Suitable polyethylene copolymers may include a wide variety of polymers, such as, e.g., ionomers, ethylene/vinyl acetate (EVA), ethylene/vinyl alcohol (EVOH), and ethylene/alpha-olefins, including heterogeneous (Ziegler-Natta catalyzed) and homogeneous (metallocene, single-cite catalyzed) ethylene/alpha-olefin copolymers. Ethylene/alpha-olefin copolymers are copolymers of ethylene with one or more comonomers selected from C₃ to C₂₀ alpha-olefins, such as 1-butene, 1-pentene, 1-hexene, 1-octene, methyl pentene and the like, including linear low density polyethylene (LLDPE), linear medium density polyethylene (MDPE), very low density polyethylene (VLDPE), and ultra-low density polyethylene (ULDPE). Second segment 92, in particular, will include a material, e.g., in the form of a layer, that presents a barrier to the passage of oxygen therethrough, such as PVDC, EVOH, polyamide, polyester, etc.

Specific examples of suitable polymers and combinations thereof in various multi-segment films are set forth in the Examples below. As demonstrated therein, significant and beneficial increases in free shrink were obtained in multi-segment, barrier films that included a microlayer section vs. similar films without a microlayer section. As also demonstrated, particularly good results were observed for those films in which at least one of the microlayers 98 comprised Ziegler-Natta catalyzed ethylene/alpha-olefin copolymer, and also for those films in which at least one of the microlayers 98 comprised metallocene-catalyzed ethylene/alpha-olefin copolymer, wherein the alpha-olefin comprises at least eight carbon atoms.

As shown in FIG. 9, bulk polymer layer 100 may be deposited onto primary forming stem 30 prior to the deposition of the microlayered fluid mass 60 onto the primary forming stem 30, such that the bulk polymer layer 100 is interposed between the microlayered fluid mass 60 and the primary forming stem 30. Alternatively, bulk polymer flow 100 may be provided by a downstream distribution plate (e.g., 32d or 32e), with no polymer flow provided by upstream distribution plates 32a-c, such that microlayered fluid mass 60 is deposited onto primary stem 30 directly and prior to the deposition thereon of bulk flow 100, i.e., with the microlayered fluid mass 60 being interposed between the stem 30 and bulk flow 100. In either case, in this embodiment of the invention, the first segment 90 of multi-segment film 88 thus includes only one bulk layer 94, resulting from bulk polymer flow 100 (FIG. 6).

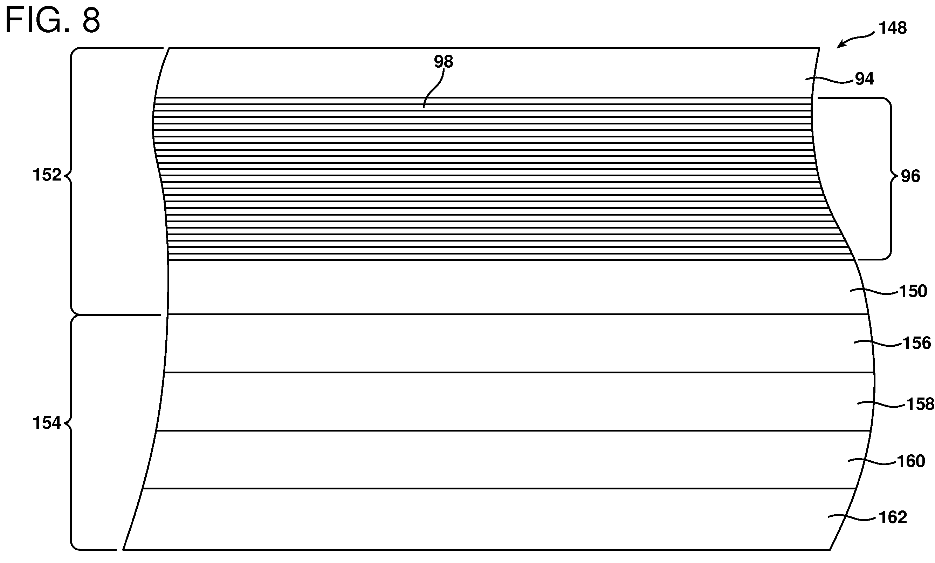

An alternative multi-segment film 148 (FIG. 8) may be produced by directing at least a third polymer through a second distribution plate, e.g., distribution plate 32d (and/or 32e). With reference to FIG. 5, for example, the relatively thick flow 70 of such third polymer from distribution plates 32d and/or 32e may be merged with the microlayered fluid mass 60 to form at least a second bulk layer 150 in the resultant first segment 152 in alternative multi-segment film 148 (see FIG. 8). In this manner, the microlayer section 96 may form a core for the alternative first segment 152, with the first bulk layer 94 forming a first outer layer for the first segment 152 and the second bulk layer 150 forming a second outer layer therefor. Thus, in the embodiment illustrated in FIG. 8, multi-segment film 148 comprises microlayer section 96 positioned between the first and second bulk layers 94, 150.

As a further variation, second segment 154 in multi-segment film 148 may include more than two layers as in second segment 92, e.g., four layers 156-162 as shown, e.g., including at least one barrier layer 156 and various bulk layers 158-162, which may provide desired properties to the second film segment 154.

Various additional bulk layers may also be included in first film segment 90 or 152 as desired. For example, to make the first segment 152 as illustrated in FIG. 8, no polymer was supplied to distribution plates 32b, c, or d. If polymer was supplied to distribution plate 32b, for example, the resultant first film segment would have an additional intermediate bulk layer between bulk layer 94 and microlayer section 96. Many other variations are, of course, possible.

As another alternative, first segment 90 or 152 may include a pair of microlayer sections 96, e.g., by adding a second microlayer assembly 34 to die 12, which forms a second microlayer section in the resultant film segment. The die could be configured, for example, in such a way that a first film segment has microlayer sections at both outer surfaces thereof, e.g., by configuring die 12 such the distribution plates 32 are sandwiched between both microlayer assemblies 34. Such configuration will produce a film segment having microlayered skins with one or more bulk layers in the core.

Multi-segment, heat-shrinkable films in accordance with the present invention may advantageously be configured in the form of a 'barrier bag,' e.g., as described in U.S. Pat. Nos. 5,834,077 and 6,514,583. A fresh meat product may be packaged in such bags by placing the product in the bag via an opening, evacuating the interior of the bag in order to remove atmospheric oxygen, sealing the bag closed, and then subjecting the sealed bag with the meat product inside to a temperature of sufficient magnitude, e.g., around 85°C (185 °F), to induce shrinkage of the bag around, and in tight conformity with, the product. The types of products that can be packaged in films and bags of the present invention include fresh and processed meat products, such as poultry, pork, beef, lamb, goat, horse, and fish.

The invention will now be further described in the following examples.

### EXAMPLES

The materials used in the examples are identified below:
1. **EVA-1:** ethylene vinyl acetate with 14.4% VA content; Escorene LD 713.93 purchased from ExxonMobil, melt flow rate of 3.5 g/10 min (ASTM D1238), density of 0.9330 g/cm³, melting point of 87°C.
2. **EVA-2:** ethylene vinyl acetate with 26.7% VA content; Escorene LD 761.93 purchased from ExxonMobil, melt flow rate of 5.8 g/10 min (ASTM D1238), density of 0.9500 g/cm³, melting point of 72°C.
3. **EVA-3:** ethylene vinyl acetate with 8.9% VA content; Elvax 3128 purchased from DuPont, melt flow rate of 2.0 g/10 min (ASTM D1238), density of 0.9280 g/cm³, melting point of 102°C.
4. **EVA-4:** ethylene vinyl acetate with 9.0% VA content, EB592AA from Westlake Chemical, melt flow rate of 2.0 g/10 min (ASTM D1238), density of 0.931 g/cm³, melting point 90°C.
5. **EVA-5:** ethylene vinyl acetate with 12% VA content, Escorene Ultra FL00112 purchased from ExxonMobil, melt flow rate of 0.5 g/10 min (ASTM D1238), density of 0.932 g/cm³, melting point of 93°C.
6. **VLDPE-1:** metallocene-catalyzed ethylene/octene copolymer very low density polyethylene, Affinity PL 1281 G1 from Dow Chemical, melt flow rate of 6.0 g/10 min (ASTM D1238), density of 0.900 g/cm³, melting point of 99°C.
   rate of 0.5 g/10 min (ASTM D1238), density of 0.903 g/cm³, melting point of 123°C.
8. **VLDPE-3:** metallocene-catalyzed ethylene/octene copolymer very low density polyethylene; Affinity PL 1850G from Dow Chemical, melt flow rate of 3.0 g/10 min (ASTM D1238), density of 0.9020 g/cm³, melting point of 97°C.
9. **VLDPE-4:** Ziegler-Natta catalyzed ethylene/hexene copolymer very low density polyethylene; CV77525 from Westlake Chemical, melt flow rate of 0.5 g/10 min (ASTM D1238), density of 0.906 g/cm³.
10.**VLDPE-5:** metallocene-catalyzed ethylene/hexene copolymer very low density polyethylene; Exceed 1012CJ from ExxonMobil, melt flow rate of 1.0 g/10 min (ASTM D1238), density of 0.912 g/cm³, melting point 116°C, crystallization temperature 101°C.
11.**VLDPE-6:** metallocene-catalyzed ethylene/octene copolymer very low density polyethylene; Exact 1007 from DexPlastomers; melt flow rate of 6.6 g/10 min (ASTM D1238), density of 0.910 g/cm³.
12.**VLDPE-7:** Ziegler-Natta catalyzed ethylene/octene copolymer very low density polyethylene; Attane SL 4102G from Dow Chemical, with a melt flow rate of 1.0 g/10 min (ASTM D1238), density of 0.905 g/cm³, and melting point of 122°C.
13.**LLDPE-1:** Ziegler-Natta catalyzed ethylene/hexene copolymer linear low density polyethylene, Escorene LL 3003.32 from ExxonMobil, melt flow rate of 3.2 g/10 min (ASTM D1238), density of 0.9175 g/cm³, melting point of 124°C.
14.**LLDPE-2:** Ziegler-Natta catalyzed ethylene/hexene copolymer linear low density polyethylene; Westlake DA74867 from Westlake Chemical, melt flow rate of 1.0 g/10 min (ASTM D1238), density of 0.917 g/cm³, melting point 117°C.
15.**LLDPE-3:** Ziegler-Natta catalyzed ethylene/octene copolymer linear low density polyethylene; XUS 61528.88 from Dow Chemical, melt flow rate of 0.85 g/10 min (ASTM D1238), density of 0.917 g/cm³, melting point 117°C.
16.**LLDPE**-4: Ziegler-Natta catalyzed ethylene/octene copolymer linear low density polyethylene; Dowlex 2045.03 from Dow Chemical, melt flow rate of 1.1 g/10 min (ASTM D1238), density of 0.920 g/cm³, melting point 125°C.
17.**PVDC-1**: vinylidene chloride/methyl acrylate copolymer with 8.5 weight % methyl acrylate (Dow internal method to obtain wt %); Saran 806 from Dow, density of 1.6865 g/cm³, melting point of 144°C.
18.**PVDC-2**: vinylidene chloride/methyl acrylate copolymer with 8.1 weight % methyl acrylate; IXAN PV910 from Solvin, with a density of 1.71 g/cm³.
19.**EBA-1**: ethylene/butyl acrylate copolymer, with 22.5% butyl acrylate content; SP1802 purchased from Westlake Chemical; melt flow rate of 0.5 g/10 min (ASTM D1238), density of 0.9280 g/cm³, melting point of 87°C.
20. LDPE-1: polyethylene low density homopolymer; EB403AQ from Westlake Chemical, contains 0.25% antiblock, density of 0.924 g/cm³, melt flow rate of 0.80 g/10 min (ASTM D1238).

### Example 1 (Comparative)

A comparative, multi-segment film was made as described above with respect to FIG. 7. A first segment had the following three-layer structure (all percentages being weight percentages):
- Layer 1:: 80% VLDPE-1 + 20% LLDPE-1 (127 µm (5.0 mils) pre-oriented/10.9 µm (0.43 mil) post-oriented)
- Layer 2:: 70% VLDPE-2 + 30% EVA-1 (229 µm (9.0 mils) pre-oriented/19.8 µm (0.78 mil) post-oriented)
- Layer 3:: 100% EVA-1 (25.4 µm (1.0 mil) pre-oriented/2.3 µm (0.09 mil) post-oriented)

Each of the listed polymers for layers 1-3 was supplied by three different extruders to an annular coextrusion die, resulting in a three-layer tubing, which formed the first/inner segment of the multi-segment film. Layer 1 formed the innermost layer of the tube and layer 3 forming the outermost layer of the tube. The three-layer tube/first segment was subsequently directed through an irradiation vault, in which it was subjected to electron-beam irradiation at 64,000 Gy (6.4 MR) to induce cross-linking among the polymers within layers 1-3.

The cross-linked, three-layer, tubular first segment was inflated and passed through a vacuum chamber, in which the outside of the inflated tube was subjected to a vacuum (76 cm (30 inches) of water) before moving through a coating die to receive a second segment, in the form of a coating on the inflated first segment. The second segment was in the form of a molten, multilayer, tubular film, which was extrusion-coated onto the outer surface (layer 3) of the first segment, at which the first and second segments fused, i.e., melt-bonded, together. The second segment had the following four-layer structure:
- Layer 4:: 100% PVDC (53 µm (2.1 mils) pre-oriented/4.6 µm (0.18 mil) post oriented)
- Layer 5:: 100% EVA-2 (25.4 µm (1.0 mil) pre-oriented/2.3 µm (0.09 mil) post-oriented)
- Layer 6:: 70% VLDPE-2 + 30% EVA-1 (76.2 µm (3.0 mils) pre-oriented/6.6 µm (0.26 mil) post-oriented)
- Layer 7:: 80% VLDPE-3 + 20% LLDPE-4 (50.8 µm (2.0 mils) pre-oriented/4.3 µm (0.17 mil) post-oriented)

The resultant multi-segment film tubing was collapsed, wound onto a roll, and then installed on a stretch-orientation device using the blown bubble technique. As described more fully above, the multi-segment film tubing was unwound from the roll, passed into a hot water bath maintained at 92.2°C (198°F) for a time sufficient to achieve an orientation temperature of 92.2°C (198°F), and then inflated into a bubble, which resulted in the biaxial orientation of the film tubing. The tubing was thus oriented in both the Longitudinal Direction (LD) and the Transverse Direction (TD) at an average racking ratio of 3.6 in the LD and 3.6 in the TD. An air ring was used to quench the oriented tube, which was then collapsed and wound into a film roll.

### Example 2 (Comparative)

A comparative, multi-segment film was made by the process described above for Comparative Example 1, and had the following four-layer structure:

### First Segment

- Layer 1:: 60% VLDPE-1 + 40% LLDPE-1 (91.4 µm (3.6 mils) pre-oriented/7.4 µm (0.29 mil) post-oriented)
- Layer 2:: 70% LLDPE-2 + 30% EVA-1 (340 µm (13.4 mils) pre-oriented/27.2 µm (1.07 mil) post-oriented)

### Second Segment

- Layer 3:: 100% PVDC (53.3 µm (2.1 mils) pre-oriented/4.3 µm (0.17 mil) post-oriented)
- Layer 4:: 70% EVA-4 + 30% LLDPE-2 (152 µm (6.0 mils) pre-oriented/12.2 µm (0.48 mil) post-oriented)

The second segment was extrusion-coated onto the first segment such that the two segments were joined (melt-bonded) at layers 2 and 3, with the first segment being the inner segment of the final tubing film and the second segment being the outer segment. As with Comparative Example 1, the inner segment was cross-linked and the entire structure was biaxially oriented via the blown-bubble technique. The structure was oriented in this manner at 92.2°C (198 °F), at an orientation ratio of 3.4 LD and 3.4 TD.

### Example 3 (Comparative)

A comparative, multi-segment film was made by the process described above for Comparative Example 1, and had the following four-layer structure:

### First Segment

- Layer 1:: 60% VLDPE-1 + 40% LLDPE-1 (91.4 µm (3.6 mils) pre-oriented/7.4 µm (0.29 mil) post-oriented)
- Layer 2:: 70% LLDPE-3 + 30% EVA-1 (340 µm (13.4 mils) pre-oriented/27.2 µm (1.07 mil) post-oriented)

### Second Segment

- Layer 3:: 100% PVDC (53.3 µm (2.1 mils) pre-oriented/4.3 µm (0.17 mil) post-oriented)
- Layer 4:: 70% EVA-4 + 30% LLDPE-3 (152 µm (6.0 mils) pre-oriented/12.2 µm (0.48 mil) post-oriented)

The second segment was extrusion-coated onto the first segment such that the two segments were joined (melt-bonded) at layers 2 and 3, with the first segment being the inner segment of the final tubing film and the second segment being the outer segment. As with Comparative Example 1, the inner segment was cross-linked and the entire structure was biaxially oriented via the blown-bubble technique. The structure was oriented in this manner at 92.2°C (198°F), at an orientation ratio of 3.6 LD and 3.6 TD.

### Example 4 (Comparative)

A comparative, multi-segment film was made by the process described above for Comparative Example 1, and had the following seven-layer structure:

### First Segment

- Layer 1:: 80% VLDPE-1 + 20% LLDPE-1 (127 µm (5.0 mils) pre-oriented/10.9 µm (0.43 mil) post-oriented)
- Layer 2:: 100% VLDPE-5 (355 µm (14.0 mils) pre-oriented/30.5 µm (1.20 mil) post-oriented)
- Layer 3:: 100% EVA-1 (25.4 µm (1.0 mil) pre-oriented/2.3 µm (0.09 mil) post-oriented)

### Second Segment

- Layer 4:: 100% PVDC (50.8 µm (2.0 mils) pre-oriented/4.3 µm (0.17 mil) post-oriented)
- Layer 5:: 100% EVA-2 (25.4 µm (1.0 mil) pre-oriented/2.3 µm (0.09 mil) post-oriented)
- Layer 6:: 100% VLDPE-5 (76.2 µm (3.0 mils) pre-oriented/6.6 µm (0.26 mil) post-oriented)
- Layer 7:: 80% VLDPE-3 + 20% LLDPE-4 (50.8 µm (2.0 mils) pre-oriented/4.3 µm (0.17 mil) post-oriented)

The second segment was extrusion-coated onto the first segment such that the two segments were joined (melt-bonded) at layers 3 and 4, with the first segment being the inner segment of the final tubing film and the second segment being the outer segment. As with Comparative Example 1, the inner segment was cross-linked and the entire structure was biaxially oriented via the blown-bubble technique. The structure was oriented in this manner at 96.1°C (205 °F), at an orientation ratio of 3.8 LD and 3.8 TD.

### Example 5

as described below and had the following 31-layer structure:

### First Segment

- Layer 1:: 80% VLDPE-1 + 20% LLDPE-1 (127 µm (5.0 mils) pre-oriented/10.9 µm (0.43 mil) post-oriented)
- Layers 2-26:: 70% VLDPE-2 + 30% EVA-1 (229 µm (9.0 mils) pre-oriented/19.8 µm (0.78 mil) post-oriented (total thickness for all 25 microlayers); avg. microlayer thickness = 10.1 µm (0.4 mil) pre-oriented/0.76 µm (0.03 mil) post-oriented)
- Layer 27:: 100% EVA-1 (25.4 µm (1.0 mil) pre-oriented/2.3 µm (0.09 mil) post-oriented)

### Second Segment

- Layer 28:: 100% PVDC (53 µm (2.1 mils) pre-oriented/4.6 µm (0.18 mil) post oriented)
- Layer 29:: 100% EVA-2 25.4 µm (1.0 mil) pre-oriented/2.3 µm (0.09 mil) post-oriented)
- Layer 30:: 70% VLDPE-2 + 30% EVA-1 (76.2 µm (3.0 mils) pre-oriented/6.6 µm (0.26 mil) post-oriented)
- Layer 31:: 80% VLDPE-3 + 20% LLDPE-4 (50.8 µm (2.0 mils) pre-oriented/4.3 µm (0.17 mil) post-oriented)

The film was made by the process described above for Comparative Example 1, except that the first segment was produced with an annular coextrusion die having a microlayer assembly 34 as described hereinabove and illustrated in FIG. 2, wherein the microlayer assembly included a total of twenty five (25) microlayer plates 48. Layer 1 was a bulk layer formed by an upstream bulk distribution plate 32; layer 2 in Comparative Example 1 was supplanted with 25 microlayers, numbered as layers 2-26, which were formed by microlayer plates 48, with each of the 25 microlayer plates being supplied with molten polymer of the type as described above (i.e., a blend of 70% VLDPE-2 + 30% EVA-1); and layer 27 (corresponding to layer 3 in Comparative Example 1) was formed by a downstream bulk distribution plate 32, such that microlayers 2-26 were sandwiched between bulk layers 1 and 27. The structure was oriented at various temperatures ranging from 77-85°C (170-185°F), at an orientation ratio of 3.7 LD and 3.7 TD.

### Example 6

A multi-segment film in accordance with the present invention was made by the process as generally described above for inventive Example 5, and had the following 31-layer structure:

### First Segment

Layer 1: 80% VLDPE-1 + 20% LLDPE-1 (127 µm (5.0 mils) pre-oriented/10.9 µm (0.43 mil) post-oriented)
Layers 2, 4, 6, 8, 10, 12, 14, 16, 18, 20, 22, 24, 26: 70% VLDPE-2 + 30% EVA-1 (avg. microlayer thickness = 10.1 µm (0.4 mil) pre-oriented/0.76 µm (0.03 mil) post-oriented)
Layers 3, 5, 7, 9, 11, 13, 15, 17, 19, 21, 23, 25, 27: 100% EVA-3 (avg. microlayer thickness = 10.1 µm (0.4 mil) pre-oriented/0.76 µm (0.03 mil) post-oriented)

**Second Segment**
- Layer 28:: 100% PVDC 53.3 µm (2.1 mils) pre-oriented/4.6 µm (0.18 mil) post-oriented)
- Layer 29:: 100% EVA-2 (25.4 µm (1.0 mil) pre-oriented/2.3 µm (0.09 mil) post-oriented)
- Layer 30:: 70% VLDPE-2 + 30% EVA-1 (76.2 µm (3.0 mils) pre-oriented/6.6 µm (0.26 mil) post-oriented)
- Layer 31:: 80% VLDPE-3 + 20% LLDPE-4 (50.8 µm (2.0 mils) pre-oriented/4.3 µm (0.17 mil) post-oriented)

The structure was oriented at 79.4°C (175°F), at an orientation ratio of 3.7 LD and 3.7 TD. The total thickness of the microlayer section (layers 2-26) was 254 µm (10 mils) (pre-oriented)/22.1 µm (0.87 mil) (post-oriented), with the layers alternating in composition between 70% VLDPE-2 + 30% EVA-1 and 100% EVA-3, for an average microlayer thickness of about 0.76 µm (0.03 mil).

### Example 7

A multi-segment film in accordance with the present invention was made by the process as generally described above for inventive Example 5, and had the following 31-layer structure:

### First Segment

- Layer 1:: 80% VLDPE-1 + 20% LLDPE-1 (127 µm (5.0 mils) pre-oriented/10.9 µm (0.43 mil) post-oriented)
- Layers 2-26:: 70% VLDPE-4 + 30% EVA-1 (229 µm (9.0 mils) pre-oriented/19.8 µm (0.78 mil) post-oriented - total thickness for all 25 microlayers (avg. oriented microlayer thickness = 0.76 µm (0.03 mils)))
- Layer 27:: 100% EVA-1 (25.4 µm (1.0 mil) pre-oriented/2.3 µm (0.09 mil) post-oriented)

### Second Segment

- Layer 28:: 100% PVDC 53.3 µm (2.1 mils) pre-oriented/4.6 µm (0.18 mil) post-oriented)
- Layer 29:: 100% EVA-2 (25.4 µm (1.0 mil) pre-oriented/2.3 µm (0.09 mil) post-oriented)
- Layer 30:: 70% VLDPE-4 + 30% EVA-1 (76.2 µm (3.0 mils) pre-oriented/6.6 µm (0.26 mil) post-oriented)
- Layer 31:: 80% VLDPE-3 + 20% LLDPE-4 (50.8 µm (2.0 mils) pre-oriented/4.3 µm (0.17 mil) post-oriented)

The structure was oriented at 82.2°C (180°F), at an orientation ratio of 3.5 LD and 3.5 TD.

### Example 8

A multi-segment film in accordance with the present invention was made by the process as generally described above for inventive Example 5, and had the following 31-layer structure:

### First Segment

- Layer 1:: 80% VLDPE-1 + 20% LLDPE-1 (127 µm (5.0 mils) pre-oriented/10.9 µm (0.43 mil) post-oriented)
- Layers 2-26:: 70% VLDPE-3 + 30% EVA-1 (229 µm (9.0 mils) pre-oriented/19.8 µm (0.78 mil) post-oriented: total thickness for all 25 microlayers (avg. oriented microlayer thickness = 0.76 µm (0.03 mils)))
- Layer 27:: 100% EVA-1 (25.4 µm (1.0 mil) pre-oriented/2.3 µm (0.09 mil) post-oriented)

### Second Segment

- Layer 28:: 100% PVDC 53.3 µm (2.1 mils) pre-oriented/4.6 µm (0.18 mil) post-oriented)
- Layer 29:: 100% EVA-2 (25.4 µm (1.0 mil) pre-oriented/2.3 µm (0.09 mil) post-oriented)
- Layer 30:: 70% VLDPE-3 + 30% EVA-1 (76.2 µm (3.0 mils) pre-oriented/6.6 µm (0.26 mil) post-oriented)
- Layer 31:: 80% VLDPE-3 + 20% LLDPE-4 (50.8 µm (2.0 mils) pre-oriented/4.3 µm (0.17 mil) post-oriented)

The structure was oriented at 85°C (185°F), at an orientation ratio of 3.5 LD and 3.5 TD.

### Example 9

A multi-segment film in accordance with the present invention was made by the process as generally described above for inventive Example 5, and had the following 28-layer structure:

### First Segment

- Layer 1:: 60% VLDPE-1 + 40% LLDPE-1 (91.4 µm (3.6 mils) pre-oriented/7.4 µm (0.29 mil) post-oriented)
- Layers 2-26:: 70% LLDPE-2 + 30% EVA-1 (340 µm (13.4 mils) pre-oriented/27.2 µm (1.07) mil post-oriented: total thickness for all 25 microlayers (avg. oriented microlayer thickness = 1.0 µm (0.04 mils)))

### Second Segment

- Layer 27:: 100% PVDC (53.3 µm (2.1 mils) pre-oriented/4.3 µm (0.17 mil) post-oriented)
- Layer 28:: 70% EVA-4 + 30% LLDPE-2 (152 µm (6.0 mils) pre-oriented/12.2 µm (0.48 mil) post-oriented)

The structure was oriented at temperatures ranging from 85-87.8°C (185-190°F), at an orientation ratio of 3.5 LD and 3.5 TD.

### Example 10

A multi-segment film in accordance with the present invention was made by the process as generally described above for inventive Example 5, and had the following 28-layer structure:

### First Segment

- Layer 1:: 60% VLDPE-1 + 40% LLDPE-1 (91.4 µm (3.6 mils) pre-oriented/7.4 µm (0.29 mil) post-oriented)
- Layers 2-26:: 70% LLDPE-3 + 30% EVA-1 (340 µm (13.4 mils) pre-oriented/27.2 µm (1.07 mil) post-oriented - total thickness for all 25 microlayers (avg. oriented microlayer thickness = 1.0 µm (0.04 mils)))

### Second Segment

- Layer 27:: 100% PVDC (53.3 µm (2.1 mils) pre-oriented/4.3 µm (0.17 mil) post-oriented)
- Layer 28:: 70% EVA-4 + 30% LLDPE-3 (152 µm (6.0 mils) pre-oriented/12.2 µm (0.48 mil) post-oriented)

The structure was oriented at 85°C (185°F), at an orientation ratio of 3.7 LD and 3.7 TD.

### Example 11

A multi-segment film in accordance with the present invention was made by the process as generally described above for inventive Example 5, and had the following 31-layer structure:

### First Segment

- Layer 1:: 80% VLDPE-1 + 20% LLDPE-1 (127 µm (5.0 mils) pre-oriented/10.9 µm (0.43 mil) post-oriented)
- Layers 2-26:: 100% VLDPE-4 (355 µm (14.0 mils) pre-oriented/30.5 µm (1.2 mil) post-oriented - total thickness for all 25 microlayers (avg. oriented microlayer thickness = 1.27 µm (0.05 mils)))
- Layer 27:: 100% EVA-1 (25.4 µm (1.0 mil) pre-oriented/2.3 µm (0.09 mil) post-oriented)

### Second Segment

- Layer 28:: 100% PVDC (50.8 µm (2.0 mils) pre-oriented/4.3 µm (0.17 mil) post-oriented)
- Layer 29:: 100% EVA-2 (25.4 µm (1.0 mil) pre-oriented/2.3 µm (0.09 mil) post-oriented)
- Layer 30:: 100% VLDPE-4 (76.2 µm (3.0 mils) pre-oriented/6.6 µm (0.26 mil) post-oriented)
- Layer 31:: 80% VLDPE-3 + 20% LLDPE-4 (50.8 µm (2.0 mils) pre-oriented/4.3 µm (0.17 mil) post-oriented)

The structure was oriented at 87.8°C(190°F), at an orientation ratio of 3.8 LD and 3.8 TD.

Each of the foregoing structures was tested for Total Free Shrink, in accordance with ASTM D2732-08. The results are summarized in Tables 1-4 below.

**TABLE 1**

| **Example** | **Brief Description** | **Total Free Shrink¹** |
|---|---|---|
| 1 (Comparative) | Seven layers; layer 2 = bulk layer comprising 70% VLDPE-2 + 30% EVA-1; no microlayer section | 76%² |
| 5 | 31 layers; similar to Comp. Ex. 1 except layer 2 replaced by a microlayer section comprising 25 microlayers; each microlayer = 70% VLDPE-2 + 30% EVA-1 | 86%² |
| 6 | 31 layers; similar to Comp. Ex. 1 except layers 2 and 3 replaced by a microlayer section comprising 25 microlayers, with the layers alternating in composition between 70% VLDPE-2 + 30% EVA-1 and 100% EVA-3 | 84% |
| 7 | 31 layers; similar to Comp. Ex. 1 except layer 2 replaced by a microlayer section comprising 25 microlayers; each microlayer = 70% VLDPE-4 + 30% EVA-1 | 84% |
| 8 | 31 layers; similar to Comp. Ex. 1 except layer 2 replaced by a microlayer section comprising 25 microlayers; each microlayer = 70% VLDPE-3 + 30% EVA-1 | 86% |

| | | |
|---|---|---|
| **¹ASTM D2732-08** **²Average of four or more samples** | | |

**TABLE 2**

| **Example** | **Brief Description** | **Total Free Shrink¹** |
|---|---|---|
| 2 (Comparative) | Four layers; layer 2 = bulk layer comprising 70% LLDPE-2 + 30% EVA-1; no microlayer section | 63% |
| 9 | 28 layers; similar to Comp. Ex. 2 except layer 2 replaced by a microlayer section comprising 25 microlayers; each microlayer = 70% LLDPE-2 + 30% EVA-1 | 70.5%² |

| | | |
|---|---|---|
| ¹ASTM D2732-08 ²Average of two samples | | |

**TABLE 3**

| **Example** | **Brief Description** | **Total Free Shrink**¹ |
|---|---|---|
| 3 (Comparative) | Four layers; layer 2 = bulk layer comprising 70% LLDPE-3 + 30% EVA-1; no microlayer section | 62% |
| 10 | 28 layers; similar to Comp. Ex. 3 except layer 2 replaced by a microlayer section comprising 25 microlayers; each microlayer = 70% LLDPE-3 + 30% EVA-1 | 67% |

| | | |
|---|---|---|
| ¹ ASTM D2732-08 | | |

**TABLE 4**

| **Example** | **Brief Description** | **Total Free Shrink**¹ |
|---|---|---|
| 4 (Comparative) | Four layers; layer 2 = bulk layer comprising 100% VLDPE-5; no microlayer section | 56% |
| 11 | 28 layers; similar to Comp. Ex. 4 except layer 2 replaced by a microlayer section comprising 25 microlayers; each microlayer = 100% VLDPE-4 | 75% |

| | | |
|---|---|---|
| ¹ ASTM D2732-08 | | |

As demonstrated in the Tables 1-4, by supplanting a bulk layer with a plurality of microlayers comprising the same or similar material as the bulk layer, an increase in free shrink was obtained for the entire film structure, which was surprisingly large in many cases.

### Example 12

A multi-segment film was made by the process as generally described above for Example 5. The film had the same structure as the film of Example 5, except that the microlayer section was thicker (34.3 µm (1.35 mils) vs. 19.8 µm (0.78 mil)), resulting in an average microlayer thickness of 1.27 µm (0.05 mil) vs. 0.76 µm (0.03 mil) for the film of Example 5. The structure was oriented at 87.8°C (190°F) and had a free shrink of 76%.

### Example 13

A multi-segment film was made by the process as generally described above for Example 5. Like Example 12, the film of Example 13 had the same structure as the film of Example 5, and also had a thicker microlayer section (34.3 µm (1.35 mils)). However, instead of using an annular coextrusion die with a microlayer section having 25 microlayer plates as in Example 12, the film of Example 13 was produced using an annular coextrusion die with a microlayer section having 49 microlayer plates, resulting in an average microlayer thickness of 0.76 µm (0.03 mil) vs. 1.27 µm (0.05 mil) for the film of Example 12. The structure was oriented at 85°C (185°F) and had a free shrink of 81 %.

Examples 12-13 demonstrate that, in general, microlayer thicknesses of less than 1.27 µm (0.05 mil) are more effective in increasing free shrink in multi-segment films than are multi-segment films having microlayer thicknesses of 1.27 µm (0.05 mil) or more.

### Example 14

A multi-segment film was made by the process as generally described above for Example 5. The film had a similar structure to that of the film of Example 5, except that layers 2-26 (the microlayer section) and layer 30 comprised a blend of 80% VLDPE-2 + 20% EVA-1 (vs. 70% VLDPE-2 + 30% EVA-1 for Example 5). The structure was oriented at 76.7°C (170°F) and had a free shrink of 87%.

### Example 15

A multi-segment film was made by the process as generally described above for Example 5. The film had a similar structure to that of the film of Example 5, except that layers 2-26 (the microlayer section) and layer 30 comprised a blend of 70% VLDPE-2 + 20% EVA-1 + 10% VLDPE-5 (vs. 70% VLDPE-2 + 30% EVA-1 for Example 5). The structure was oriented at 82.2°C (180°F) and had a free shrink of 83%.

### Example 16

A multi-segment film was made by the process as generally described above for Example 5. The film had a similar structure to that of the film of Example 5, except that layers 2-26 (the microlayer section) and layer 30 comprised a blend of 70% VLDPE-5 + 30% EVA-1 (vs. 70% VLDPE-2 + 30% EVA-1 for Example 5). VLDPE-5 is a metallocene-catalyzed ethylene/hexene copolymer while VLDPE-2 is a Ziegler-Natta catalyzed ethylene/octene copolymer. The structure was oriented at 90.6°C (195°F) and had a free shrink of 72%.

### Example 17

A multi-segment film was made by the process as generally described above for Example 5. The film had a similar structure to that of the film of Example 5, except that layers 2-26 (the microlayer section) and layer 30 comprised a blend of 90% VLDPE-5 + 10% EVA-1 (vs. 70% VLDPE-2 + 30% EVA-1 for Example 5). VLDPE-5 is a metallocene-catalyzed ethylene/hexene copolymer while VLDPE-2 is a Ziegler-Natta catalyzed ethylene/octene copolymer. The structure was oriented at 90.6°C (195°F) and had a free shrink of 66%.

### Example 18

A multi-segment film was made by the process as generally described above for Example 5. The film had a similar structure to that of the film of Example 5, except that layers 2-26 (the microlayer section) and layer 30 comprised a blend of 90% VLDPE-3 + 10% EVA-1 (vs. 70% VLDPE-2 + 30% EVA-1 for Example 5). VLDPE-3 is a metallocene-catalyzed ethylene/octene copolymer while VLDPE-2 is a Ziegler-Natta catalyzed ethylene/octene copolymer. The structure was oriented at 87.8°C (190°F) and had a free shrink of 82%.

### Example 19

A multi-segment film was made by the process as generally described above for Example 5. The film had a similar structure to that of the film of Example 5, except that layers 2-26 (the microlayer section) and layer 30 comprised a blend of 90% VLDPE-2 + 10% EVA-1 (vs. 70% VLDPE-2 + 30% EVA-1 for Example 5). The structure was oriented at 85°C (185°F) and had a free shrink of 83%.

### Example 20

A multi-segment film was made by the process as generally described above for Example 5. The film had a similar structure to that of the film of Example 5, except that layers 2-26 (the microlayer section) and layer 30 comprised a blend of 80% VLDPE-2 + 20% VLDPE-5 (vs. 70% VLDPE-2 + 30% EVA-1 for Example 5). The structure was oriented at 85°C (185°F) and had a free shrink of 77%.

### Example 21

A multi-segment film was made by the process as generally described above for Example 5. The film had a similar structure to that of the film of Example 20, except that VLDPE-5 (a metallocene-catalyzed ethylene/hexene copolymer) in Example 20 was supplanted by VLDPE-3 (metallocene-catalyzed ethylene/octene copolymer) in the microlayer section (layers 2-26) and in layer 30. The structure was oriented at 87.8 °C (190°F) and had a free shrink of 82%.

### Example 22

A multi-segment film was made by the process as generally described above for Example 5, and had a similar structure, except that layers 2, 4, 6, 8, 10, 12, 14, 16, 18, 20, 22, 24, and 26 comprised 100% VLDPE-2 while layers 3, 5, 7, 9, 11, 13, 15, 17, 19, 21, 23, 25, and 27 comprised 90% VLDPE-5 + 10% LDPE-1. The structure was oriented at 85°C (185°F) and had a free shrink of 76%.

### Example 23

A multi-segment film was made by the process as generally described above for Example 5, and had a similar structure, except that layers 2-26 (the microlayer section) comprised a blend of 80% VLDPE-2 + 20% VLDPE-4. The structure was oriented at 87.8°C (190°F) and had a free shrink of 77%.

### Comparative Example 24

A multi-segment film was made by the process as generally described above for Comparative Example 1. The film had a similar structure to that of the film of Comparative Example 1, except that layers 2 and 6 comprised a blend of 100% VLDPE-5. The structure was oriented at 96.1°C (205°F) and had a free shrink of 56%.

### Example 25

A multi-segment film was made by the process as generally described above for Example 5. The film had a similar structure to that of the film of Comparative Example 24, except that layer 2 was replaced with 25 microlayers comprising VLDPE-5. The structure was oriented at 96.1°C (205°F) and had a free shrink of 57%.

### Example 26

A multi-segment film was made by the process as generally described above for Example 5. The film had a similar structure to that of the film of Example 25, except that microlayers 2-26 were replaced VLDPE-3, which is a metallocene-catalyzed ethylene/octene copolymer (vs. VLDPE-5 in Example 25, which is a metallocene-catalyzed ethylene/hexane copolymer). The structure was oriented at 90.6°C (195°F) and had a free shrink of 82%.

Examples 14-26 demonstrate that, in general, 1) Ziegler-Natta catalyzed ethylene/alpha-olefin copolymers are more effective in increasing free shrink in multi-segment films, when placed in the microlayer section, than are metallocene-catalyzed ethylene/alpha-olefin copolymers, and 2) metallocene-catalyzed ethylene/octene copolymers are more effective in increasing free shrink in multi-segment films, when placed in the microlayer section, than are metallocene-catalyzed ethylene/hexene copolymers.

### Example 27

A multi-segment film was made by the process as generally described above for Example 5, and had a similar structure, except that layers 2-26 (the microlayer section) and layer 30 comprised a blend of 60% VLDPE-2 + 40% EVA-1. The structure was oriented at 82.2°C (180°F) and had a free shrink of 90%.

### Example 28

A multi-segment film was made by the process as generally described above for Example 5, and had a similar structure, except that layers 2-26 (the microlayer section) and layer 30 comprised a blend of 40% VLDPE-2 + 60% EVA-1. The structure was oriented at 76.7°C (170°F) and had a free shrink of 93%.

### Example 29

A multi-segment film was made by the process as generally described above for Example 5, and had a similar structure, except that in layers 2-26 (the microlayer section) and layer 30, EVA-1 was supplanted by EBA-1, an ethylene/butyl acrylate copolymer. The structure was oriented at 82.2°C (180°F) and had a free shrink of 88%.

Examples 27-29 demonstrate that various blends of ethylene copolymers, including ethylene/alpha-olefins, ethylene/acetates, and ethylene/acrylates, when employed in a microlayer section of a multi-segment films, are effective in improving the free shrink of such films, e.g., relative to a similar structure having no microlayer section (see, e.g., Comparative Example 1).

### Example 30

A multi-segment film in accordance with the present invention was made by the process as generally described above for inventive Example 5, and had the following 30-layer structure:

### First Segment

Layer 1: 80% VLDPE-1 + 20% VLDPE-6 (119 µm (4.7 mils) pre-oriented/9.1 µm (0.36 mil) post-oriented)
Layers 2, 4, 6, 8, 10, 12, 14, 16, 18, 20, 22, 24, 26: 85% EVA-5 + 15% VLDPE-7 (avg. microlayer thickness = 13.4 µm (0.53 mil) pre-oriented/1.0 µm (0.04 mil) post-oriented)
Layers 3, 5, 7, 9, 11, 13, 15, 17, 19, 21, 23, 25: 100% VLDPE-7 (avg. microlayer thickness = 3.81 µm (0.15 mil) pre-oriented/0.25 µm (0.01 mil) post-oriented)
Layer 27: 100% VLDPE-7 (22.1 µm (0.87 mil) pre-oriented/1.8 µm (0.07 mil) post-oriented)
Layer 28: 85% EVA-5 + 15% VLDPE-7 (87.9 µm (3.46 mils) pre-oriented/6.6 µm (0.26 mil) post-oriented)

### Second Segment

- Layer 29:: 100% PVDC-2 (50.8 µm (2.0 mils) pre-oriented/3.8 µm (0.15 mil) post-oriented)
- Layer 30:: 70% EVA-5 + 30% VLDPE-7 (140 µm (5.5 mils) pre-oriented/10.7 µm (0.42 mil) post-oriented)

The foregoing structure was made numerous times, and was oriented at temperatures ranging from 90-92.8°C (194-199 °F), resulting in average orientation ratios of 3.4 LD and 4.0 TD. The total thickness of the microlayer section (layers 2-26) was 110.5 µm (4.35 mils) (pre-oriented)/8.13 µm (0.325 mil) (post-oriented), with the microlayers alternating in composition between 85% EVA-5 + 15% VLDPE-7 and 100% VLDPE-7. Note that microlayers 2, 4, 6, 8, 10, 12, 14, 16, 18, 20, 22, 24, 26 (85% EVA-5 + 15% VLDPE-7) were thicker than microlayers 3, 5, 7, 9, 11, 13, 15, 17, 19, 21, 23, 25 (100% VLDPE-7), with the former being thicker (1.0 µm (0.04 mil)) than the latter (0.25 µm (0.01 mil)). The structure had a final thickness of 40.1 µm (1.58 mils), with an average free shrink of 71 %.

While the invention has been described with reference to illustrative examples, those skilled in the art will understand that various modifications may be made to the invention as described without departing from the scope of the claims which follow.

## Claims

1. A multi-segment, heat-shrinkable film, comprising:
a. a first segment, comprising
1) a bulk layer, and
2) a microlayer section comprising a plurality of microlayers, wherein each of said microlayers and said bulk layer have a thickness such that the ratio of the thickness of any of said microlayers to the thickness of said bulk layer is at least 1:2, and
wherein said microlayer section comprises at least 10 microlayers; and
b. a second segment, joined to said first segment, said second segment having an oxygen transmission rate of no more than 100 cc/m²-atm.-24 hrs. at 23°C (73°F) and 0% relative humidity,
wherein, said multi-segment film has a total free shrink (ASTM D2732-08) of at least 30% at 85°C (185°F).

2. The multi-segment film of claim 1, wherein
said first segment comprises at least one layer comprising cross-linked polymer; and
said second segment is not cross-linked and comprises at least one layer comprising a polymer or copolymer comprising vinylidene chloride.

3. The multi-segment film of claim 1, wherein
said first segment has been exposed to ionizing radiation; and
said second segment has been extrusion-coated onto said first segment.

4. The multi-segment film of claim 1, wherein said multi-segment film has a total free shrink (ASTM D2732-08) of at least 40% at 85°C (185°F).

5. The multi-segment film of claim 1, wherein said multi-segment film has an orientation ratio of at least 2, as measured in at least one direction along a length or width dimension of said multi-segment film.

6. The multi-segment film of claim 1, wherein
said first segment further includes at least a second bulk layer; and
said microlayer section is positioned between said bulk layers.

7. The multi-segment film of claim 1, wherein
said microlayers each have a thickness ranging from 0.025 to 2.5 µm (0.001 to 0.1 mil), and
said bulk layer has a thickness ranging from 1.27 to 63.5 µm (0.05 to 2.5 mil).

8. The multi-segment film of claim 1, wherein said microlayers have a thickness of less than 1.27 µm (0.05 mil).

9. The multi-segment film of claim 1, wherein at least one of said microlayers comprises Ziegler-Natta catalyzed ethylene/alpha-olefin copolymer.

10. The multi-segment film of claim 1, wherein at least one of said microlayers comprises metallocene-catalyzed ethylene/alpha-olefin copolymer, wherein said alpha-olefin comprises at least eight carbon atoms.

11. A heat-shrinkable bag made from the film of claim 1.

12. A heat-shrunk meat package made from the bag of claim 11.

13. A method of making a multi-segment, heat-shrinkable film, comprising:
a. forming a first film segment, comprising
1) a bulk layer, and
2) a microlayer section comprising a plurality of microlayers, wherein said microlayer section comprises at least 10 microlayers, and wherein each of said microlayers and said bulk layer have a thickness such that the ratio of the thickness of any of said microlayers to the thickness of said bulk layer is at least 1:2;
b. forming a second film segment, said second segment having an oxygen transmission rate of no more than 100 cc/m²-atm.-24 hrs. at 23° C (73°F) and 0% relative humidity;
c. joining said first film segment to said second film segment to thereby produce a multi-segment film; and
d. stretch-orienting said multi-segment film under conditions that impart heat-shrinkability to said film;
wherein, said multi-segment film has a total free shrink (ASTM D2732-08) of at least 30% at 85°C (185°F).

## Patentansprüche

1. Wärmeschrumpfbare Folie mit mehreren Segmenten, die
a. ein erstes Segment umfassend
1) eine Massenschicht und
2) einen Mikroschichtabschnitt, der eine Vielzahl von Mikroschichten umfasst, wobei jede der Mikroschichten und die Massenschicht eine Dicke aufweisen, so dass das Verhältnis der Dicke jeder der Mikroschichten zu der Dicke der Massenschicht mindestens 1:2 beträgt, und wobei der Mikroschichtabschnitt mindestens 10 Mikroschichten umfasst, und
b. ein zweites Segment, das an das erste Segment angrenzt, wobei das zweite Segment eine Sauerstoffdurchlässigkeit von nicht mehr als 100 ccm/m²-atm.-24h bei 23°C (73°F) und 0% relativer Feuchtigkeit aufweist,
umfasst, wobei die Folie mit mehreren Segmenten eine gesamte freie Schrumpfung (ASTM D2732-08) von mindestens 30% bei 85°C (185°F) aufweist.

2. Folie mit mehreren Segmenten gemäß Anspruch 1, wobei
das erste Segment mindestens eine Schicht umfasst, die ein quervernetztes Polymer enthält, und
das zweite Segment nicht quervernetzt ist und mindestens eine Schicht umfasst, die ein Polymer oder Copolymer enthält, welches Vinylidenchlorid umfasst.

3. Folie mit mehreren Segmenten gemäß Anspruch 1, wobei das erste Segment einer ionisierenden Strahlung ausgesetzt worden ist und
das zweite Segment auf das erste Segment extrusionsbeschichtet ist.

4. Folie mit mehreren Segmenten gemäß Anspruch 1, wobei die Folie mit mehreren Segmenten eine gesamte freie Schrumpfung (ASTM D2732-08) von mindestens 40% bei 85°C (185°F) aufweist.

5. Folie mit mehreren Segmenten gemäß Anspruch 1, wobei die Folie mit mehreren Segmenten ein Orientierungsverhältnis von mindestens 2 aufweist, gemessen in mindestens einer Richtung entlang einer Längen- oder Breitendimension der Folie mit mehreren Segmenten.

6. Folie mit mehreren Segmenten gemäß Anspruch 1, wobei
das erste Segment ferner mindestens eine zweite Massenschicht umfasst und
der Mikroschichtabschnitt zwischen den Massenschichten angeordnet ist.

7. Folie mit mehreren Segmenten gemäß Anspruch 1, wobei
die Mikroschichten jeweils eine Dicke im Bereich von 0,025 bis 2,5 µm (0,001 bis 0,1 mil) aufweisen und
die Massenschicht eine Dicke im Bereich von 1,27 bis 63,5 µm (0,05 bis 2,5 mil) aufweist.

8. Folie mit mehreren Segmenten gemäß Anspruch 1, wobei die Mikroschichten eine Dicke von weniger als 1,27 µm (0,05 mil) aufweisen.

9. Folie mit mehreren Segmenten gemäß Anspruch 1, wobei mindestens eine der Mikroschichten ein Ziegler-Nattakatalysiertes Ethylen/alpha-Olefin-Copolymer umfasst.

10. Folie mit mehreren Segmenten gemäß Anspruch 1, wobei mindestens eine der Mikroschichten Metallocen-katalysiertes Ethylen/alpha-Olefin-Copolymer umfasst, wobei das alpha-Olefin mindestens acht Kohlenstoffatome umfasst.

11. Wärmeschrumpfbarer Beutel, der aus der Folie gemäß Anspruch 1 hergestellt ist.

12. Wärmegeschrumpfte Fleischverpackung, die aus dem Beutel gemäß Anspruch 11 hergestellt ist.

13. Verfahren zur Herstellung einer wärmeschrumpfbaren Folie mit mehreren Segmenten, bei dem
a. ein erstes Foliensegment gebildet wird, das
1) eine Massenschicht und
2) einen Mikroschichtabschnitt umfassend eine Vielzahl von Mikroschichten, wobei der Mikroschichtabschnitt mindestens 10 Mikroschichten umfasst und jede der Mikroschichten und die Massenschicht eine Dicke aufweisen, so dass das Verhältnis der Dicke jeder der Mikroschichten zu der Dicke der Massenschicht mindestens 1:2 beträgt, umfasst
b. ein zweites Foliensegment gebildet wird, wobei das zweite Segment eine Sauerstoffdurchlässigkeit von nicht mehr als 100 ccm/m²-atm.-24h. bei 23°C (73°F) und 0% relativer Feuchtigkeit aufweist,
c. das erste Foliensegment an das zweite Foliensegment gefügt wird, um dadurch eine Folie mit mehreren Segmenten zu erzeugen, und
d. die Folie mit mehreren Segmenten unter Bedingungen, die der Folie Wärmeschrumpfbarkeit verleihen, mittels Streckung orientiert wird,
wobei die Folie mit mehreren Segmenten eine gesamte freie Schrumpfung (ASTM D2732-08) von mindestens 30% bei 85°C (185°F) aufweist.

## Revendications

1. Film thermorétractable à plusieurs segments, comprenant :
a. un premier segment, comprenant
1) une couche de masse, et
2) une section de microcouches comprenant une pluralité de microcouches,
dans lequel chacune desdites microcouches et de ladite couche de masse possède une épaisseur telle que le rapport de l'épaisseur de l'une quelconque desdites microcouches sur l'épaisseur de ladite couche de masse est d'au moins environ 1:2 ; et
dans lequel ladite section de microcouches comprend au moins 10 microcouches ; et
b. un second segment, relié audit premier segment, ledit second segment ayant un taux de transmission d'oxygène pas supérieur à 100 cc/m²-atm.-24 heures à 23 C (73°F) et à une humidité relative de 0 %,
dans lequel ledit film à plusieurs segments a une rétraction libre totale (ASTM D2732- 08) d'au moins 30 % à 85°C (185°F).

2. Film à plusieurs segments selon la revendication 1, dans lequel
ledit premier segment comprend au moins une couche comprenant un polymère réticulé ; et
ledit second segment n'est pas réticulé, et comprend au moins une couche comprenant un polymère ou un copolymère comprenant du chlorure de vinylidène.

3. Film à plusieurs segments selon la revendication 1, dans lequel
ledit premier segment a été exposé à un rayonnement ionisant ; et
ledit second segment a été revêtu par extrusion sur ledit premier segment.

4. Film à plusieurs segments selon la revendication 1, dans lequel ledit film à plusieurs segments a une rétraction libre totale (ASTM D2732-08) d'au moins 40 % à 85°C (185°F).

5. Film à plusieurs segments selon la revendication 1, dans lequel ledit film à plusieurs segments a un rapport d'orientation d'au moins 2, tel que mesuré dans au moins une direction le long d'une dimension de longueur ou de largeur dudit film à plusieurs segments.

6. Film à plusieurs segments selon la revendication 1, dans lequel
ledit premier segment comprend en outre au moins une seconde couche de masse ; et
ladite section de microcouches est positionnée entre lesdites couches de masse.

7. Film à plusieurs segments selon la revendication 1, dans lequel
lesdites microcouches ont chacune une épaisseur dans la plage de 0,025 à 2,5 µm (0,001 à 0,1 mil), et
ladite couche de masse a une épaisseur dans la plage de 1,27 à 63,5 µm (0,05 à 2,5 mil).

8. Film à plusieurs segments selon la revendication 1, dans lequel lesdites microcouches ont une épaisseur inférieure à 1,27 µm (0,05 mil).

9. Film à plusieurs segments selon la revendication 1, dans lequel au moins l'une desdites microcouches comprend un copolymère d'éthylène catalysé/alpha-oléfine du type Ziegler-Natta.

10. Film à plusieurs segments selon la revendication 1, dans lequel au moins l'une desdites microcouches comprend un copolymère d'éthylène catalysé par metallocène/alpha-oléfine, ladite alpha-oléfine comprenant au moins huit atomes de carbone.

11. Sac thermorétractable constitué du film de la revendication 1.

12. Conditionnement alimentaire thermorétractable constitué du sac de la revendication 11.

13. Procédé de fabrication d'un film thermorétractable à plusieurs segments, comprenant l'étape consistant à
a. former un premier segment de film, comprenant
1) une couche de masse, et
2) une section de microcouches comprenant une pluralité de microcouches,
dans lequel ladite section de microcouches comprend au moins 10 microcouches, et
dans lequel chacune desdites microcouches et de ladite couche de masse possède une épaisseur telle que le rapport de l'épaisseur de l'une quelconque desdites microcouches sur l'épaisseur de ladite couche de masse est d'au moins environ 1:2; et
b. former un second segment de film, ledit second segment ayant un taux de transmission d'oxygène pas supérieur à 100 cc/m²-atm.-24 heures à 23 C (73°F) et à une humidité relative de 0 %,
c. relier ledit premier segment de film et ledit second segment de film pour produire ainsi un film à plusieurs segments ; et
d. orienter par étirement ledit film à plusieurs segments dans des conditions qui impriment un caractère thermorétractable audit film ;
dans lequel ledit film à plusieurs segments a une rétraction libre totale (ASTM D2732- 08) d'au moins 30 % à 85°C (185°F).
